# EUROPEAN PATENT APPLICATION

(11) **EP 4 819 596 A1**
(43) Date of publication of application: **07.10.2026**
(21) Application number: 26167880.9
(22) Date of filing: 26.03.2026
(51) Int. Cl.: H04N 1/00, G06F 3/12

(54) **INFORMATION PROCESSING APPARATUS, METHOD, PROGRAM, AND STORAGE MEDIUM STORING A PROGRAM**

(30) Priority: 04.04.2025 JP 2025062551
(71) Applicant: CANON KABUSHIKI KAISHA, Ohta-ku Tokyo 146-8501 (JP)
(72) Inventor: MIYAO, Kenta, Tokyo (JP)
(74) Representative: WESER & Kollegen Patentanwälte PartmbB

(57) **Abstract**

An information processing apparatus capable of communicating with a communication apparatus, the information processing apparatus includes: first display control means configured to, at a predetermined timing after setting processing of the communication apparatus for performing communication between the information processing apparatus and the communication apparatus is executed, control a dialog screen that prompts a change in a power-related setting of the communication apparatus to be displayed based on a condition for displaying the dialog screen being satisfied. The dialog screen is configured to be capable of accepting an instruction as to whether to change the power-related setting.

## Description

### TECHNICAL FIELD

The present disclosure relates to an information processing apparatus, a method, a program, and a storage medium storing a program.

### BACKGROUND

In recent years, software for implementing various functions such as printing functions, scanning functions, and setup functions in an application format (called a "peripheral device portal application" hereinafter) has come to be known as software for controlling peripheral devices such as printers. In addition, a device such as a printer having a communication function is provided with a function for automatically powering on when a predetermined condition is satisfied (called an "automatic power-on function" hereinafter). This function can be enabled or disabled as desired by a user. For example, when the automatic power-on function is enabled, the printer can automatically power on when data for printing or scanning is transmitted to the printer from a peripheral device portal application or the like. Note that when the automatic power-on function is enabled, wireless LAN or Bluetooth communication is often possible even if the printer is off, and the printer is generally powered on automatically when these wireless communications are implemented.

Japanese Patent Application Laid-Open No. 2024-114716 discloses a method according to which a printer is turned on under various conditions during wireless communication such as over a wireless LAN, Bluetooth, or the like in order to make it easy for a user to perform communication between a communication apparatus and an information processing apparatus.

### SUMMARY

The present disclosure provides an information processing apparatus, a method, a program, and a storage medium storing a program that appropriately makes changes to power-related settings.

The present disclosure in its first aspect provides an information processing apparatus as specified in claim 1. Optional features are specified in claim 2 to 14.

The present disclosure in its second aspect provides a method as specified in claim 15.

The present disclosure in its third aspect provides a program as specified in claim 16.

The present disclosure in its fourth aspect provides a non-transitory computer-readable storage medium as specified in claim 17.

According to the present disclosure, changes to power-related settings can be made appropriately.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a diagram illustrating the configuration of a system.
Fig. 2 is a diagram illustrating the configurations of apparatuses.
Fig. 3 is a diagram illustrating the software configuration of an information processing apparatus.
Figs. 4A and 4B are diagrams illustrating user interface screens.
Fig. 5 is a diagram illustrating a user interface screen.
Fig. 6 is a flowchart illustrating processing performed by the information processing apparatus.
Fig. 7 is a diagram illustrating a user interface screen.
Fig. 8 is a diagram illustrating a user interface screen.
Fig. 9 is a diagram illustrating a user interface screen.
Fig. 10 is a diagram illustrating a user interface screen.
Fig. 11 is a diagram illustrating a user interface screen.
Fig. 12 is a flowchart illustrating processing performed by the information processing apparatus.
Figs. 13A and 13B are diagrams illustrating user interface screens.
Fig. 14 is a diagram illustrating a user interface screen.
Fig. 15 is a diagram illustrating a user interface screen.
Fig. 16 is a diagram illustrating a user interface screen.
Fig. 17 is a flowchart illustrating processing performed by the information processing apparatus.
Fig. 18 is a flowchart illustrating processing performed by the information processing apparatus.
Figs. 19A and 19B are flowcharts illustrating processing performed by the information processing apparatus.
Figs. 20A and 20B are flowcharts illustrating processing performed by the information processing apparatus.
Fig. 21 is a diagram illustrating a user interface screen.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

Certain regions may have regulations regarding power management. Therefore, in such certain regions, it is conceivable that changes to power-related settings in devices, such as automatic power-on functions and the like, need to be made appropriately in consideration of such power management regulations and the like.

### First Embodiment

An information processing apparatus and a communication apparatus included in a communication system according to the present embodiment will be described hereinafter. The information processing apparatus will also be referred to as a "terminal apparatus". The present embodiment will describe a smartphone as an example of the information processing apparatus, but the information processing apparatus is not limited thereto. A variety of devices, such as a personal computer (PC), a tablet terminal, a Personal Digital Assistant (PDA), a digital camera, or the like can be applied as the information processing apparatus. The present embodiment will also describe a printer as an example of the communication apparatus. The printer may be an ink jet printer that prints using ink, or a laser beam printer that prints using toner. The printer may be a full-color printer capable of color printing, or a black and white printer capable of black and white printing but not color printing. The communication apparatus according to the present embodiment is not limited to a printer, and any apparatus can be applied as the communication apparatus as long as the apparatus is capable of communicating wirelessly with the information processing apparatus. For example, the communication apparatus can be applied to a copier, a facsimile device, a scanner, a smartphone, a PC, a tablet terminal, a PDA, a digital camera, a music playback device, a television, a smart speaker, a robotic vacuum cleaner, an automatic cooking pot, a refrigerator, or the like. The communication apparatus can also be a multifunction peripheral provided with a plurality of functions, such as a copying function, a fax function, a printing function, and the like.

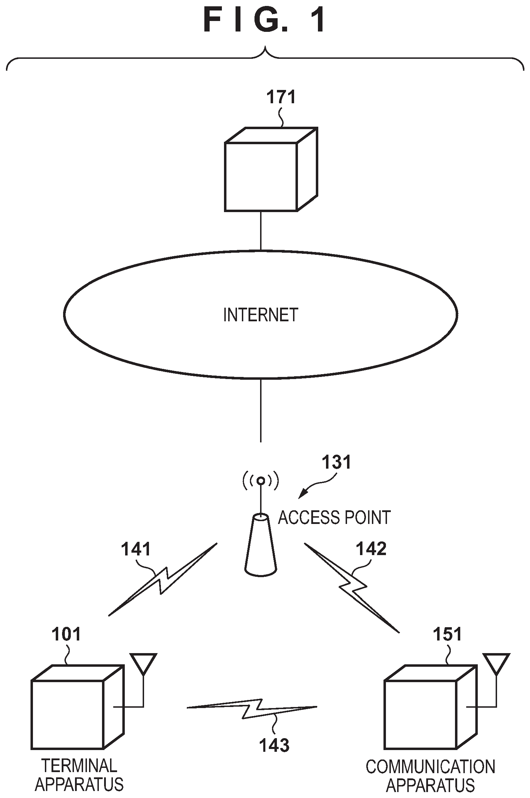

A system configuration for implementing the present embodiment will be described first. Fig. 1 is a diagram illustrating an example of the configuration of the communication system according to the present embodiment. This system includes a communication apparatus 151, an information processing apparatus 101, an access point (AP) 131, and an external server 171.

The information processing apparatus 101 is the information processing apparatus according to the present embodiment. The communication apparatus 151 is the communication apparatus according to the present embodiment. The AP 131 is an access point that is activated by an external apparatus outside both the information processing apparatus 101 and the communication apparatus 151. The external apparatus is, for example, a wireless local area network (LAN) router. The external server 171 is a server capable of providing services over the Internet to devices connected to the AP 131.

When the communication apparatus 151 and the information processing apparatus 101 are connected to the AP 131, a LAN formed by the AP 131 includes the AP 131, the communication apparatus 151, and the information processing apparatus 101. On the other hand, a Wide Area Network (WAN) includes the AP 131 and the external server 171.

In the present embodiment, when an infrastructure connection (described later) is established, the information processing apparatus 101 can communicate with the communication apparatus 151 via the AP 131. Furthermore, when a direct connection (described later) is established, the information processing apparatus 101 can communicate directly with the communication apparatus 151 without going through the AP 131. Note that in the following, a "connection with an AP" corresponds to a connection to a network formed by the AP. Note that a single external apparatus may activate a plurality of APs, and the external apparatus device may be capable of forming a plurality of networks simultaneously.

The present embodiment assumes that a connection 141 between the information processing apparatus 101 and the AP 131 and a connection 142 between the communication apparatus 151 and the AP 131 are connections using communication methods that are based on an IEEE 802.11 series standard. The communication method that is based on the IEEE 802.11 series standard is specifically Wireless Fidelity (Wi-Fi) (registered trademark). A connection 143 between the information processing apparatus 101 and the communication apparatus 151 is also assumed to be a connection using a communication method that is based on an IEEE 802.11 series standard. However, the communication method used for the connection 143 is not limited to these methods, and may be, for example, Bluetooth (registered trademark) Low Energy (BLE), Bluetooth Classic, Wi-Fi Aware, Near Field Communication (NFC), or the like. The AP 131 and the external server 171 can communicate over the Internet, and in a state where the AP 131 is connected to the Internet, apparatuses connected to the AP 131 (the information processing apparatus 101, the communication apparatus 151, and the like) can also use the Internet. Note that the connection 141 between the information processing apparatus 101 and the AP 131 and the connection 142 between the communication apparatus 151 and the AP 131 may be wired LAN connections.

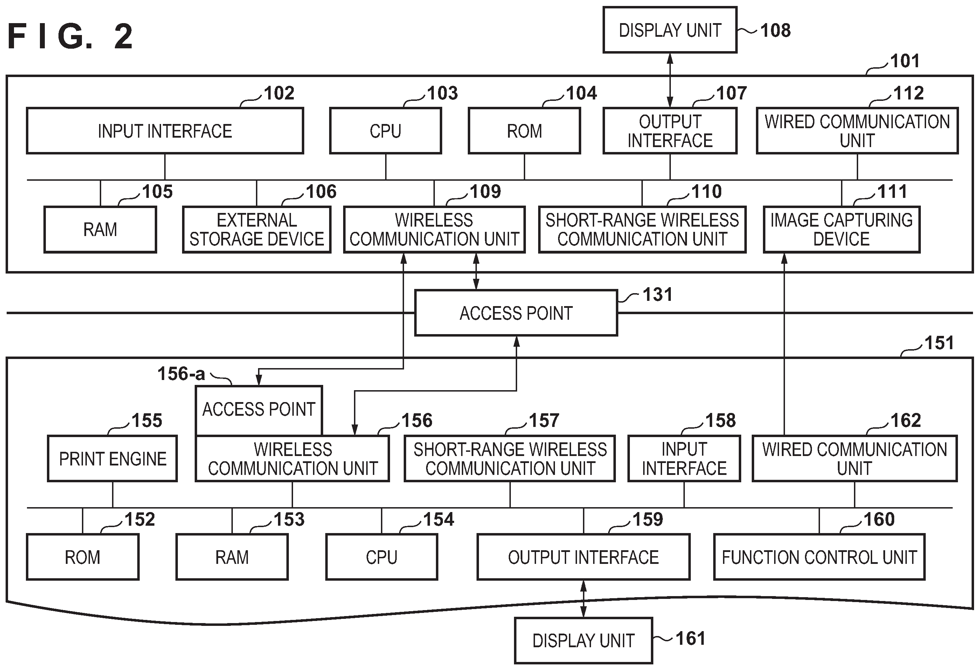

The configuration of the information processing apparatus according to the present embodiment, and the communication apparatus capable of communicating with the information processing apparatus according to the present embodiment, will be described with reference to the block diagram in Fig. 2. Although the present embodiment will describe the following configuration as an example, the present embodiment can be applied to any apparatus capable of communicating with the communication apparatus, and the functions are not particularly limited to those illustrated here.

The information processing apparatus 101 includes an input interface 102, a CPU 103, a ROM 104, a RAM 105, an external storage device 106, an output interface 107, a display unit 108, a wireless communication unit 109, a short-range wireless communication unit 110, an image capturing device 111, a wired communication unit 112, and the like. A computer of the information processing apparatus 101 is constituted by the CPU 103, the ROM 104, the RAM 105, and the like.

The input interface 102 is an interface capable of accepting data inputs, operational instructions, and the like from a user, and is constituted by a physical keyboard, buttons, a touch panel, or the like. Note that the output interface 107 (described later) and the input interface 102 may be implemented by the same configuration, with that configuration both outputting screens and accepting operations from the user.

The CPU 103 is a system control unit, and controls the information processing apparatus 101 as a whole. In the present embodiment, the CPU 103 controls the content displayed in the display unit 108 (display control) and the like.

The ROM 104 stores fixed data such as control programs executed by the CPU 103, data tables, an operating system ("OS", hereinafter) program, and the like. In the present embodiment, the control programs stored in the ROM 104 perform software execution control, such as scheduling, task switching, interrupt processing, and the like, under the management of the embedded OS stored in the ROM 104. In the present embodiment, the ROM 104 stores a predetermined application program (app) for controlling the communication apparatus 151. The application program is, in other words, application software. The predetermined app is installed in the information processing apparatus 101 from the outside using a store app for installing various apps, for example. The predetermined app is an app provided by the vendor of the communication apparatus 151, and is an app for communicating with the communication apparatus 151 and configuring the connection for the communication apparatus 151. Note that the predetermined app may have other functions aside from the function for configuring the connection for the communication apparatus 151. Specifically, for example, the other functions include a function for transmitting a print job for causing the communication apparatus 151 to print (a print job transmission function), a function for transmitting a scan job for causing the communication apparatus 151 to scan (a scan job transmission function), and the like. Note that processing described as processing executed by the OS in the present embodiment is, strictly speaking, processing executed by the CPU 103 in accordance with programs within the OS. Likewise, processing described as processing performed by an app is, strictly speaking, processing performed by the CPU 103 in accordance with programs within the app.

The RAM 105 is constituted by Static Random Access Memory (SRAM) or the like that requires a backup power source. Note that the RAM 105 holds data by using a primary battery for data backup (not shown), and can therefore store important data such as program control variables in a non-volatile state. A memory area for storing configuration information of the information processing apparatus 101, management data of the information processing apparatus 101, and the like is also provided in the RAM 105. The RAM 105 is also used as a main memory and a working memory for the CPU 103.

Additionally, the external storage device 106 includes various types of programs, such as a print information generation program that generates print information which can be interpreted by the communication apparatus 151, an information transmission/reception control program that transmits and receives information to and from the connected communication apparatus 151 through the wireless communication unit 109, and the like. The external storage device 106 also stores various types of information used by these programs, image data obtained from other information processing apparatuses, the Internet, and the like.

The output interface 107 is an interface for controlling the display unit 108 to display data, make notifications of the state of the information processing apparatus 101, and the like.

The display unit 108 is constituted by light-emitting diodes (LEDs), a liquid crystal display (LCD), or the like, and displays data, makes notifications regarding the state of the information processing apparatus 101, and the like. Note that inputs from the user can be accepted through the display unit 108 by providing, in the display unit 108, a software keyboard including numerical value input keys, a mode setting key, a confirm key, a cancel key, a power key, and the like. The present embodiment assumes that the display unit 108 is a touch panel, and can accept operations from a user by the user's finger, a stylus, or the like.

The wireless communication unit 109 is a configuration for wirelessly connecting to devices such as the communication apparatus 151, the AP 131, and the like, and communicating data. For example, the wireless communication unit 109 may communicate directly with the communication apparatus 151 wirelessly, or may communicate via the AP 131 outside the information processing apparatus 101, the communication apparatus 151, and the like. Although the present embodiment assumes that Wi-Fi, which is a communication method that is based on the IEEE 802.11 standard, is used as the wireless communication method of the wireless communication unit 109, Bluetooth Classic or the like may be used instead. The present embodiment also assumes that the wireless LAN is a network using Wi-Fi. Note that a connection using a method in which the information processing apparatus 101 and the communication apparatus 151 connect directly without going through an external AP will be referred to as a "direct connection" in the present embodiment. A connection using a method in which the information processing apparatus 101 and the communication apparatus 151 connect via an external AP will be referred to as an "infrastructure connection".

The short-range wireless communication unit 110 is an element for communicating data with devices such as the communication apparatus 151 through a short-range wireless communication method, and communicates using a communication method different from that of the wireless communication unit 109. The short-range wireless communication unit 110 can connect to a short-range wireless communication unit 157 in the communication apparatus 151. Note that BLE, Bluetooth Classic, Wi-Fi Aware, NFC, and the like can be given as examples of the communication method of the short-range wireless communication unit 110.

The image capturing device 111 is a device that converts images captured by an image sensor into digital data. The digital data is initially stored in the RAM 105. The digital data is then converted to a predetermined image format by a program executed by the CPU 103, and the resulting data is stored in the external storage device 106 as image data.

The wired communication unit 112 is a configuration for connecting over wires to devices such as the communication apparatus 151, the AP 131, and the like, and communicating data. For example, the wired communication unit 112 communicates over the wired LAN. The present embodiment assumes that the wired LAN communicates according to the Ethernet standard. Note, however, that the configuration is not limited thereto, and the wired communication unit 112 may communicate over a Universal Serial Bus (USB) cable, for example. Additionally, for example, if the information processing apparatus 101 is a smartphone, the information processing apparatus 101 need not include the wired communication unit 112.

The communication apparatus 151 includes a ROM 152, a RAM 153, a CPU 154, a print engine 155, a wireless communication unit 156, the short-range wireless communication unit 157, an input interface 158, an output interface 159, a function control unit 160, a display unit 161, a wired communication unit 162, and the like. A computer of the communication apparatus 151 is constituted by the ROM 152, the RAM 153, the CPU 154, and the like.

The wireless communication unit 156 is a configuration for wirelessly connecting to devices such as the information processing apparatus 101, the AP 131, and the like, and communicating data. Although the present embodiment assumes that Wi-Fi, which is a communication method that is based on the IEEE 802.11 standard, is used as the wireless communication method of the wireless communication unit 156, Bluetooth Classic or the like may be used instead. As an AP internal to the communication apparatus 151, the wireless communication unit 156 includes an AP 156-a for connecting to devices such as the information processing apparatus 101. The AP is capable of connecting to the wireless communication unit 109 of the information processing apparatus 101. Note that the wireless communication unit 156 may communicate directly with the information processing apparatus 101 via an AP 156-a, or may communicate with the information processing apparatus 101 via the AP 131. Additionally, the AP 156-a may be hardware that functions as an AP, or the wireless communication unit 156 may operate as an AP 156-a using software for functioning as an AP. The communication apparatus 151 may be capable of internally activating a plurality of APs having different Service Set Identifiers (SSIDs), passwords, and the like.

The RAM 153 is constituted by DRAM or the like that requires a backup power source. Note that the RAM 153 holds data by being supplied with power for data backup (not shown), and can therefore store important data such as program control variables in a non-volatile state. The RAM 153 is also used as a main memory and working memory for the CPU 154, and functions as a reception buffer for temporarily storing print information received from the information processing apparatus 101 to store various types of information.

The ROM 152 stores fixed data such as control programs executed by the CPU 154, data tables, OS programs, and the like. In the present embodiment, the control programs stored in the ROM 152 perform software execution control, such as scheduling, task switching, interrupt processing, and the like, under the management of the embedded OS stored in the ROM 152. A memory area for storing data required to be held even when power is not supplied, such as configuration information of the communication apparatus 151, management data of the communication apparatus 151, and the like, is also provided in the ROM 152.

The CPU 154 is a system control unit, and controls the communication apparatus 151 as a whole.

Based on the information stored in the RAM 153 and a print job received from the information processing apparatus 101 or the like, the print engine 155 forms an image on a printing medium such as paper using a printing agent such as ink, and the result of the printing is output. At this time, the print job transmitted from the information processing apparatus 101 or the like involves transmitting a large amount of data and requires highspeed communication, and is therefore assumed to be received via the wireless communication unit 156, which is capable of faster communication than the short-range wireless communication unit 157.

The short-range wireless communication unit 157 is an element for communicating with devices such as the information processing apparatus 101 using a short-range wireless communication method. Note that BLE, Bluetooth Classic, Wi-Fi Aware, and the like can be given as examples of the communication method of the short-range wireless communication unit 157.

The input interface 158 is an interface capable of accepting data inputs, operational instructions, and the like from a user, and is constituted by a physical keyboard, buttons, a touch panel, or the like. Note that the output interface 159 (described later) and the input interface 158 may be implemented by the same configuration, with that configuration both outputting screens and accepting operations from the user. The output interface 159 is an interface for controlling the display unit 161 to display data, make notifications of the state of the communication apparatus 151, and the like.

The function control unit 160 manages whether to operate each function of the communication apparatus 151.

The display unit 161 is constituted by light-emitting diodes (LEDs), a liquid crystal display (LCD), or the like, and displays data, makes notifications regarding the state of the communication apparatus 151, and the like. Note that inputs from the user can be accepted through the display unit 161 by providing, in the display unit 161, a software keyboard including numerical value input keys, a mode setting key, a confirm key, a cancel key, a power key, and the like.

The wired communication unit 162 is a configuration for connecting over wires to devices such as the information processing apparatus 101, the AP 131, and the like, and communicating data. For example, the wired communication unit 162 communicates over the wired LAN. Note, however, that the configuration is not limited thereto, and the communication may be performed over a USB cable, for example.

### Direct Connection Method

"Direct connection" refers to a form in which devices connect directly to each other (i.e., peer-to-peer) wirelessly, without going through an external apparatus such as the AP 131 or the like. Direct connection will also be referred to as a "peer-to-peer connection" ("P2P connection"). The communication apparatus 151 can operate in a mode for communicating over a direct connection (a "direct connection mode") as one connection mode. Wi-Fi communication includes a plurality of modes for communicating over a direct connection, such as a software AP mode, a Wi-Fi Direct (WFD) mode, and the like.

A mode in which a direct connection is made through WFD is called "WFD mode". WFD is a standard developed by the Wi-Fi Alliance and is included in the IEEE 802.11 series communication standard. In WFD mode, a device to serve as a communication partner is searched for using a device search command, after which the roles of P2P group owner (GO) and P2P client are determined, and the remaining wireless connections are processed. "Group owner" corresponds to the parent station (parent device) in Wi-Fi, and the client corresponds to a child station (child device) in Wi-Fi. This role determination corresponds to GO Negotiation in P2P, for example. In WFD mode, the communication apparatus 151 is neither the parent station nor the child station before the roles have been determined. Specifically, one device among the devices that are to communicate issues the device search command, and searches for a device to connect to in WFD mode. When the other device, which is to serve as the communication partner, is discovered, the devices confirm information pertaining to the services and functions those respective devices can supply. Note that the confirmation of the device supply information is optional, and is not required. The device supply information confirmation phase corresponds to Provision Discovery in P2P, for example. Next, which device will serve as the P2P client and which will serve as the P2P group owner is determined by confirming this device supply information with each other. Once the client and the group owner have been determined, the devices exchange parameters for communicating through WFD. The remaining wireless connections and IP connections are processed between the P2P client and group owner based on the exchanged parameters. Note that in WFD mode, the communication apparatus 151 may skip the GO Negotiation described above, and the communication apparatus 151 may always operate as the GO. In other words, the communication apparatus 151 may operate in Autonomous GO mode, which is a WFD mode. A state in which the communication apparatus 151 is operating in WFD mode is a state in which, for example, a connection using WFD is not established but the communication apparatus 151 is operating as the GO, a connection using WFD is established and the communication apparatus 151 is operating as the GO, or the like.

In the software AP mode, among the communicating devices (e.g., the information processing apparatus 101 and the communication apparatus 151), one of the devices (e.g., the information processing apparatus 101) functions as a client that has a role of requesting various types of services. The other device provides a Wi-Fi AP function by configuring software. The software AP corresponds to the parent station in Wi-Fi, and the client corresponds to the child station in Wi-Fi. In software AP mode, the client uses a device search command to search for a device that will serve as a software AP. Once a software AP is discovered, the remaining wireless connection processing (the establishment of a wireless connection and the like) is performed between the client and the software AP, after which IP connection processing (IP address allocation and the like) is performed. Note that commands, parameters, and the like sent and received when establishing a wireless connection between the client and the software AP may be any specified by the Wi-Fi standard, and will therefore not be described here.

In the present embodiment, when establishing and maintaining a direct connection, the communication apparatus 151 operates as the parent station in the network to which the communication apparatus 151 belongs. Note that "parent station" refers to a device that constructs a wireless network, and is a device that provides child stations with the parameters used to connect to the wireless network. The parameters used to connect to the wireless network are parameters pertaining to a channel used by the parent station, for example. By receiving these parameters, a child station connects to the wireless network constructed by the parent station using the channel used by the parent station. In direct connection mode, the communication apparatus 151 operates as the parent station, and the communication apparatus 151 can therefore determine which frequency band and which channel to use in the communication performed in direct connection mode. In the present embodiment, the communication apparatus 151 is assumed to use a channel corresponding to the 2.4 GHz frequency band and a channel corresponding to the 5 GHz frequency band in the communication performed in direct connection mode.

### Infrastructure Connection Method

An "infrastructure connection" is a type of connection for devices that are to communicate (e.g., the information processing apparatus 101 and the communication apparatus 151) to connect to an AP (e.g., the AP 131) handling the network of those devices, and communicate with each other via the AP. The communication apparatus 151 is also capable of operating in a mode for communicating over an infrastructure connection (infrastructure connection mode) as one connection mode.

In an infrastructure connection, each device uses a device search command to search for an AP. Once an AP is discovered, the remaining wireless connection processing (the establishment of a wireless connection and the like) is performed between the device and the AP, after which IP connection processing (the allocation of IP addresses and the like) is performed. Note that commands, parameters, and the like sent and received when establishing a wireless connection between the devices and the AP may be any specified by the Wi-Fi standard, and will therefore not be described here.

In the present embodiment, when the communication apparatus 151 operates over an infrastructure connection, the AP 131 operates as the parent station and the communication apparatus 151 operates as a child station. In other words, in the present embodiment, "infrastructure connection" refers to a connection between the communication apparatus 151, which operates as a child station, and a device operating as a parent station. When the communication apparatus 151 has established an infrastructure connection and the information processing apparatus 101 has also established an infrastructure connection with the AP 131, the communication apparatus 151 and the information processing apparatus 101 can communicate via the AP 131. The channel used for communication in the infrastructure connection is determined by the AP 131, and thus the communication apparatus 151 communicates over the infrastructure connection using the channel determined by the AP 131. In the present embodiment, the communication apparatus 151 is assumed to use a channel corresponding to the 2.4 GHz frequency band and a channel corresponding to the 5 GHz frequency band in the communication performed in the infrastructure connection. Note that the communication apparatus 151 can also use a channel corresponding to the DFS band and the 5 GHz frequency band in the communication performed in the infrastructure connection. Note also that to communicate with the communication apparatus 151 via the AP 131, the information processing apparatus 101 recognizes and specifies the communication apparatus 151 as belonging to the network that is formed by the AP 131 and to which the information processing apparatus 101 belongs.

### Connection Setting Processing

In the present embodiment, the information processing apparatus 101 executes connection setting processing (setup processing), which is a configuration for causing the communication apparatus 151 to operate in at least one of the infrastructure connection and direct connection communication methods, using wireless communication between the information processing apparatus 101 and the communication apparatus 151. The connection setting processing according to the present embodiment is executed through wireless communication and is therefore also called "cableless setup" (CLS) or "wireless setup processing". Note, however, that the connection setting processing may be executed through wired communication. The information processing apparatus 101 performs the connection setting processing with the communication apparatus 151 when a predetermined app stored in the external storage device 106 or the like is running. The communication apparatus 151 can operate in a connection configuration mode (connection configuration state), which is a mode for executing the connection setting processing, and executes the connection setting processing while operating in the connection configuration mode (which will be described later). The connection configuration mode will be described in detail later.

When causing the communication apparatus 151 to operate in infrastructure connection mode, the information processing apparatus 101 wirelessly transmits infrastructure connection configuration information, which is configuration information for operating in infrastructure connection mode, to the communication apparatus 151. The infrastructure connection configuration information includes information pertaining to the AP 131. The information pertaining to the AP 131 is, for example, information pertaining to a Service Set Identifier (SSID), a password, a frequency band, or the like.

On the other hand, when causing the communication apparatus 151 to operate in direct connection mode, the information processing apparatus 101 wirelessly transmits direct connection configuration information, which is configuration information for operating in direct connection mode, to the communication apparatus 151. The direct connection configuration information includes instructions for enabling the WFD function in order to operate as the Group Owner, enabling access point settings for the communication apparatus 151, and the like. The information processing apparatus 101 also obtains connection information for a direct connection with the communication apparatus 151 from the communication apparatus 151. The connection information for a direct connection with the communication apparatus 151 includes, for example, information such as an SSID, a password, or the like of the AP of the communication apparatus 151 operating in direct connection mode.

In the present embodiment, a direct connection for configuring the connection between the information processing apparatus 101 and the communication apparatus 151 is used in the connection setting processing to transmit the infrastructure connection configuration information, the direct connection configuration information, and the like, and to obtain information for the direct connection with the communication apparatus 151. Although the connection setting processing is executed using Wi-Fi for the direct connection for configuring the connection in the present embodiment, a wireless communication standard other than Wi-Fi, such as Bluetooth Classic or Bluetooth Low Energy, for example, may be used instead. Alternatively, a wired communication standard such as wired LAN, Universal Serial Bus (USB), or the like may be used for the direct connection for configuring the connection. In these forms, the information processing apparatus 101 may maintain a Wi-Fi connection with the AP even while a connection is established between the communication apparatus 151 operating in the connection configuration mode and the information processing apparatus 101.

Through the connection setting processing, after an infrastructure connection over Wi-Fi is established between the information processing apparatus 101 and the communication apparatus 151, or a direct connection is established, the information processing apparatus 101 and the communication apparatus 151 can communicate over the established connection. Specifically, over the established connection, the information processing apparatus 101 can transmit, to the communication apparatus 151, a print job for causing the communication apparatus 151 to execute a print, or a scan job for causing the communication apparatus 151 to execute a scan, for example. In the present embodiment, the communication apparatus 151 can be caused to operate in infrastructure connection mode, and the communication apparatus 151 can be caused to operate in direct connection mode, through the connection setting processing, but the configuration is not limited thereto. For example, the connection setting processing may cause only the communication apparatus 151 to operate in infrastructure connection mode (i.e., the communication apparatus 151 cannot be caused to operate in direct connection mode).

### Connection Configuration Mode

The communication apparatus 151 can operate in connection configuration mode. The trigger for the communication apparatus 151 to start operating in connection configuration mode may be, for example, a user pressing a connection configuration mode button, or the communication apparatus 151 being started (powered on) for the first time after arrival upon being shipped. The connection configuration mode button may be a physical button included in the communication apparatus 151, or may be a software button displayed on the display unit 161 by the communication apparatus 151.

When the communication apparatus 151 starts operating in connection configuration mode, both Wi-Fi communication and BLE communication are enabled. Specifically, the communication apparatus 151 enables an internal AP of the communication apparatus 151 (a connection configuration AP), which is specifically for connection configuration mode, as processing for enabling Wi-Fi communication. This enables the communication apparatus 151 to establish a direct connection with the information processing apparatus 101 using Wi-Fi. Connection information (an SSID, a password, or the like) for connecting to the connection configuration AP is held in advance in a predetermined app installed in the information processing apparatus 101. In other words, it is assumed that the information processing apparatus 101 has recognized connection information for connecting to the connection configuration AP in advance. Accordingly, unlike the connection information of the AP enabled in the direct connection mode, it is assumed that the connection information for connecting to the connection configuration AP cannot be changed by the user as desired. Note that an encryption method need not be set for the connection configuration AP, and thus a password may be unnecessary for connecting to the AP. Note that in connection configuration mode, the communication apparatus 151 may connect to the information processing apparatus 101 using Wi-Fi Direct (WFD) instead of normal Wi-Fi. In other words, the communication apparatus 151 may operate as the Group Owner and receive configuration commands from the information processing apparatus 101 through communication using WFD. In addition, when the communication apparatus 151 does not have a BLE communication function or the like, the communication apparatus 151 may enable only Wi-Fi communication when operating in connection configuration mode.

### Registration of Communication Apparatus in App

In the present embodiment, the predetermined app of the information processing apparatus 101 can register the communication apparatus 151 in the predetermined app by obtaining information pertaining to the communication apparatus 151 from the communication apparatus 151. The information pertaining to the communication apparatus 151 includes, for example, capability information of the communication apparatus 151, identification information (a MAC address or the like) of the communication apparatus 151, model information of the communication apparatus 151, and the like. Specifically, the capability information of the communication apparatus 151 includes a list of information on the functions supported by the communication apparatus 151, information on consumables (ink, paper, and the like) usable in the communication apparatus 151, information indicating the printing method (ink jet printing method or the like) of the communication apparatus 151, and the like. The predetermined app then selects one of one or more communication apparatuses 151 registered in the predetermined app as an apparatus to serve as a partner for communication by the predetermined app. Hereinafter, the communication apparatus 151 currently selected as the apparatus that serves as a partner for communication by the predetermined app will be called a "currently-selected communication apparatus 151". Note that the selection of the apparatus to serve as a partner for communication by the predetermined app may be executed by accepting a selection from one or more communication apparatuses 151 registered in the predetermined app from the user, or automatically by the predetermined app according to predetermined criteria. The apparatus that serves as a partner for communication by the predetermined app may be changed, for example, by accepting a selection from one or more communication apparatuses 151 registered in the predetermined app from the user. In the present embodiment, the predetermined app transmits various types of jobs, such as print jobs, scan jobs, and the like, to the currently-selected communication apparatus 151. In other words, the currently-selected communication apparatus 151 is an apparatus that serves as a destination for transmitting various types of jobs.

### Software Configuration

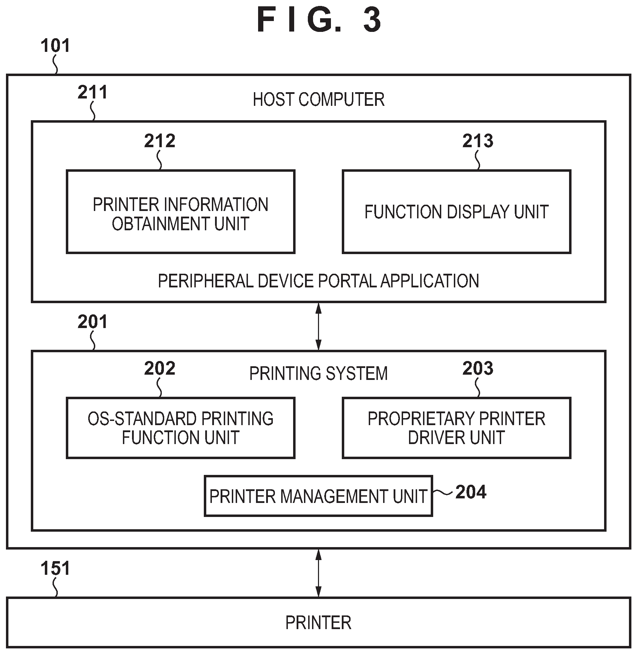

Fig. 3 is a diagram illustrating an example of the software configuration of the information processing apparatus 101. Hereinafter, the information processing apparatus 101 will be called a "host computer", and the communication apparatus 151 will be called a "printer 151".

The host computer 101 includes a printing system 201 for providing a printing function. The printing system 201 includes an OS-standard printing function unit 202, a proprietary printer driver unit 203, and a printer management unit 204.

The OS-standard printing function unit 202 and the proprietary printer driver unit 203 are software for converting data output from an application into data that can be processed by the printer 151 and causing the printer to print based on that data.

To enable the printer 151 to be used in the printing system 201, the printer 151 to be used is registered in advance through the printer management unit 204. The registration processing is performed for each printer or connection form. For example, the same printer can be registered and managed separately for both a connection form using USB (a USB connection) and a connection form using a network such as a LAN (a network connection). The host computer 101 also includes a peripheral device portal application 211. The peripheral device portal application 211 includes a printer information obtainment unit 212 and a function display unit 213. Note that the peripheral device portal application 211 corresponds to the "predetermined app" described with reference to Fig. 2.

The peripheral device portal application 211 is software for executing processing related to obtaining information, printing, scanning, and the like in the printer 151 in accordance with user instructions, the connection state of the printer, and the like. The peripheral device portal application 211 is stored in the ROM 104, for example, and is read out and executed by the CPU 103.

The printer information obtainment unit 212 obtains device information of the printer 151. As a specific example, the printer information obtainment unit 212 may obtain information pertaining to the printer 151 from the printer 151 as described above as the device information, or may obtain device information of the printer 151 registered with the printer management unit 204.

The function display unit 213 displays various types of information, such as the device information of the printer 151 obtained by the printer information obtainment unit 212, in a predetermined display region to present that information to the user. The function display unit 213 may also have a function for displaying a web page based on the device information of the printer 151 obtained by the printer information obtainment unit 212. A web page that enables settings of a target printer to be changed over a network through a web browser can be given as an example of the web page displayed by the function display unit 213 based on the device information of the printer 151. In the present embodiment, such a web page will also be called a remote user interface (UI). The remote UI of the printer 151 is started by the web browser of the host computer 101 being launched and a URL of the printer 151 being input as an address.

An overview of the printer management unit 204 of the printing system 201 according to the present embodiment will be described next.

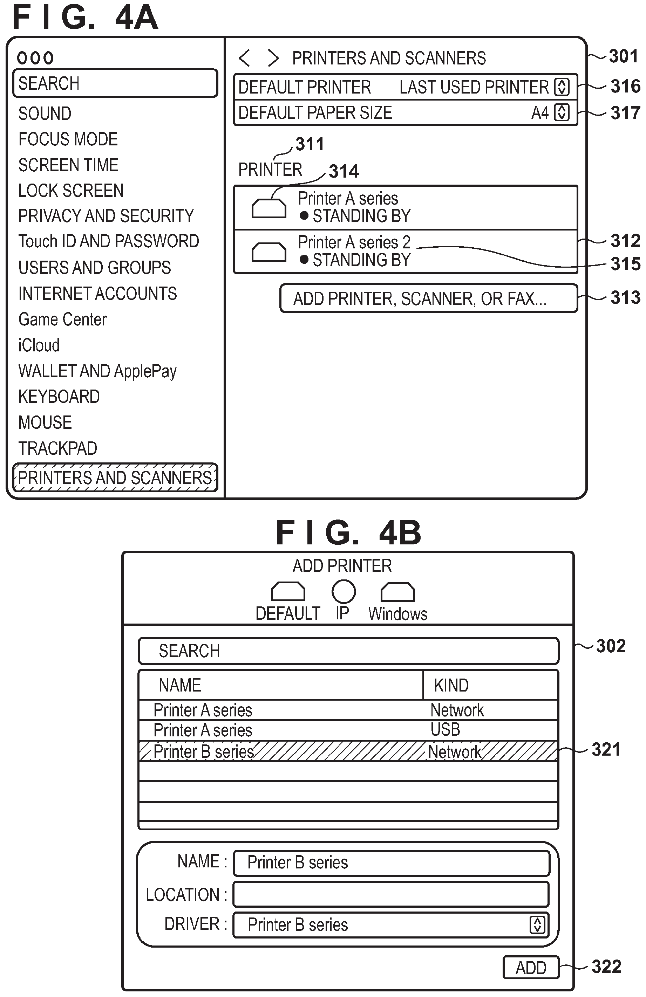

Fig. 4A is a diagram illustrating an example of a screen displayed by the printer management unit 204 of the printing system 201. For example, the screen illustrated in Fig. 4A is a screen displayed in response to accepting an instruction from a user in a standard environment settings application operating on the macOS (registered trademark) of the United States' Apple Inc. A screen 301 illustrated in Fig. 4A includes a printer list part 311, a printer registration button 313, a printer preview part 314, a printer information part 315, a default printer setting part 316, and a default paper size setting part 317.

When registering a printer in the printing system 201, the user first presses an "Add printer, scanner, or fax..." button, which is the printer registration button 313. When the printer registration button 313 is pressed, a connected printer list screen 302 of the printer management unit 204 is displayed as a separate screen, as illustrated in Fig. 4B. Printers detected by the host computer 101 are displayed in the connected printer list screen 302 in a connected printer list part 321. In this case, a printer that supports a plurality of connection forms is displayed separately for each connection form. For example, a printer capable of a network connection and a USB connection is displayed in the connected printer list part 321 as both connection forms, i.e., both a network connection and a USB connection. When the user selects a desired printer in the connected printer list part 321 and presses a registration (add) button 322, printer registration processing for registering the printer in the printer management unit 204 is executed. When the printer registration processing is successful, the connected printer list screen 302 of the printer management unit 204 is closed, and a printer queue of the registered printer is added to a region 312 enclosed in a bold frame in the printer list part 311 of the screen 301.

A printer displayed in the printer list part 311 of the printer management unit 204 corresponds to a printer queue registered in the printing system 201, and is a printer capable of printing and scanning. When the user selects a printer in the printer list part 311, a preview image indicating the selected printer is displayed in the printer preview part 314. The printer information part 315 also displays information indicating a printer status (e.g., standing by).

In the present embodiment, a power function of the printer 151 can be set from the peripheral device portal application 211 (called simply an "application 211" hereinafter) of the host computer 101. Specifically, for example, the application 211 can set an automatic power-on function of the printer 151 to be enabled or disabled. The automatic power-on function is a function that automatically puts the printer 151 in a printing-capable state when the printer 151 receives, for example, a print job from the outside while in a power-saving state, in which the power consumption of the printer 151 is lower than a normal state. Although the automatic power-on function can be set through the display unit 161 of the printer 151, the automatic power-on function can also be set through the remote UI displayed by the function display unit 213 of the application 211 of the host computer 101.

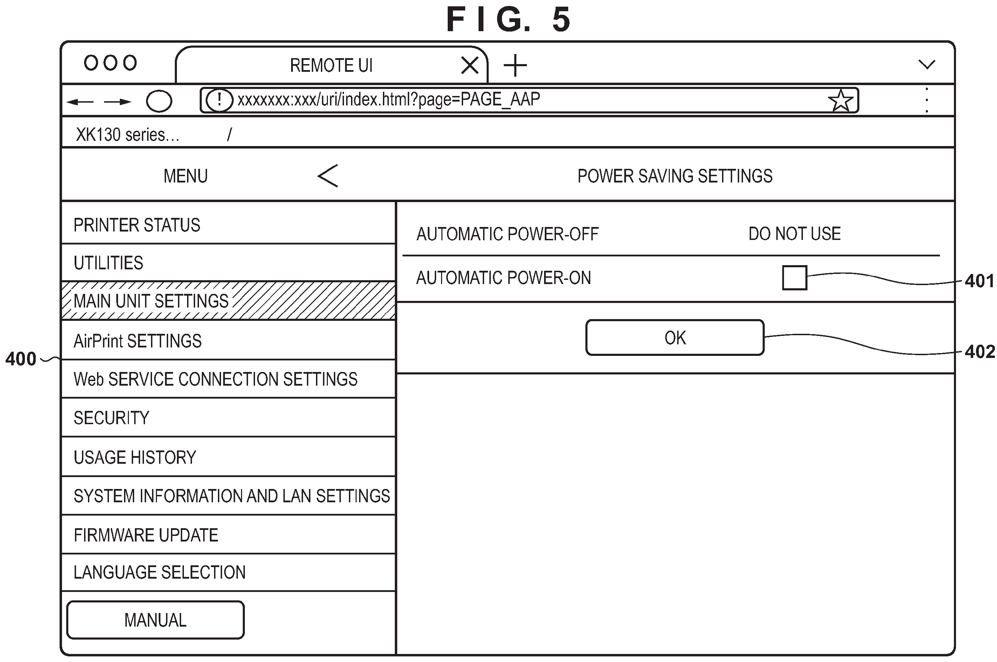

Fig. 5 is a diagram illustrating an example of a screen for setting the automatic power-on function. The screen illustrated in Fig. 5 is a remote UI screen displayed by the function display unit 213 of the application 211 of the host computer 101. A remote UI screen 400 includes a checkbox 401 indicating the setting status of the automatic power-on function and a setting information confirmation part 402 (an OK button). A power saving settings screen is displayed on the remote UI screen 400 to enable the automatic power-on function. The user can then communicate with the printer 151 and set the automatic power-on function to be enabled in the printer 151 by checking the checkbox 401 indicating the setting state of the automatic power-on function and pressing the setting information confirmation part 402.

Guiding users to set up the automatic power-on function during setup procedures performed by the users is an effective way to improve awareness about automatic power-on functions as such automatic power-on functions spread. However, in certain regions, operations such as disabling power management during setup procedures may be regulated. It is therefore difficult to guide a user to automatic power-on function settings during setup procedures in a single, uniform way. The present embodiment enables the implementation of a system that appropriately guides the user regarding the setting of the automatic power-on function.

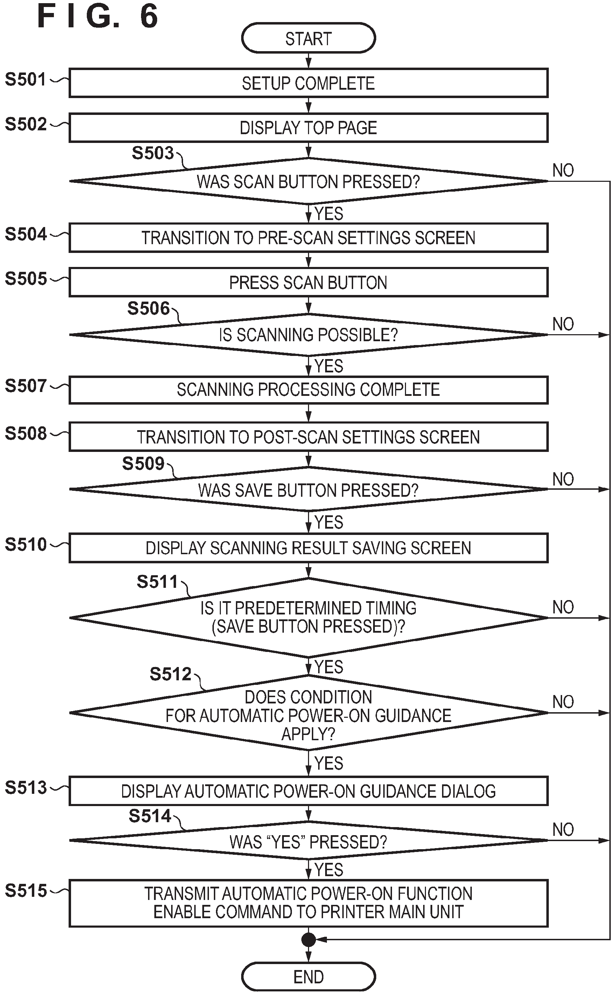

Fig. 6 is a flowchart illustrating processing for guiding the user regarding the setting of the automatic power-on function at a predetermined timing. The processing in Fig. 6 is implemented, for example, by the CPU 103 reading out a program stored in the ROM 104 into the RAM 105 and executing that program. The processing illustrated in Fig. 6 is executed by the application 211.

In step S501, the CPU 103 detects that the setup has been executed through the application 211 and that the setup has been completed. Specifically, for example, the CPU 103 detects that the setup has been completed in response to the device information of the printer 151 being registered in the application 211.

In step S502, the CPU 103 displays a top page screen 600 on the display unit 108.

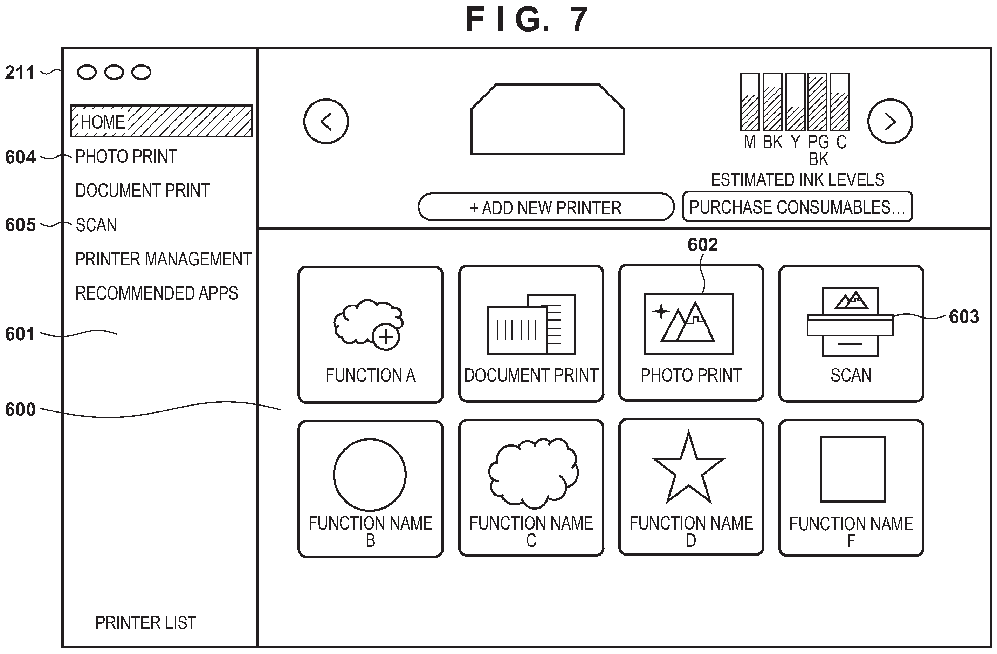

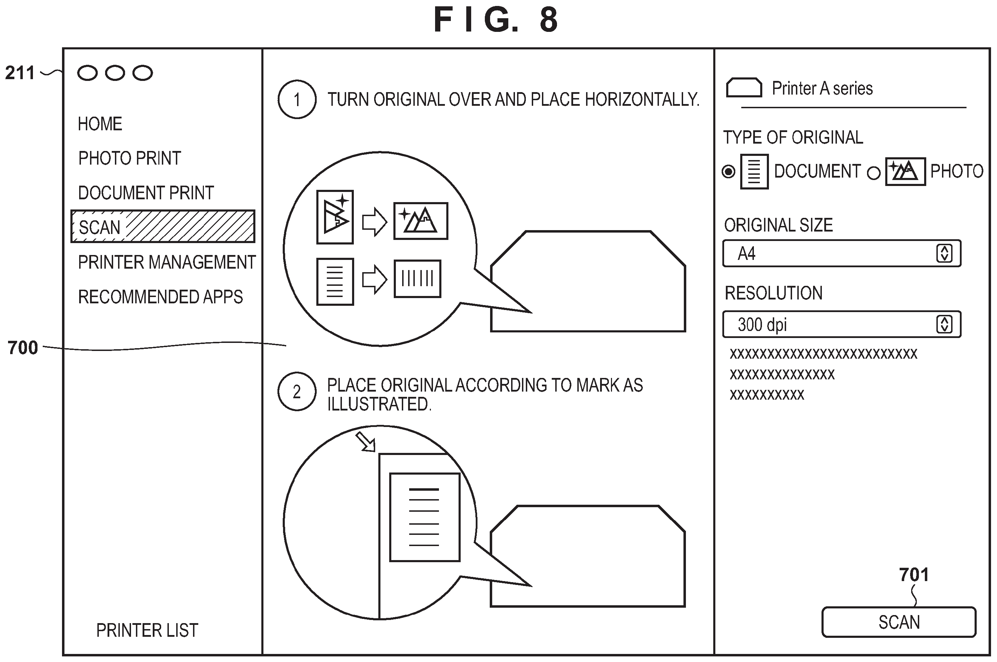

Fig. 7 is a diagram illustrating an example of the top page screen 600 displayed in step S502. The top page screen 600 is an example of a screen of a top page of the application 211. A sidebar 601 is an example of a sidebar UI of the application 211. A photo print button 602 and a scan button 603 are disposed in the top page screen 600. When the scan button 603 is pressed, the screen transitions to a pre-scan settings screen 700 (described later). When the photo print button 602 is pressed, the screen transitions to a pre-print photo settings screen (not shown). A photo print button 604 and a scan button 605 are disposed in the sidebar 601. When the scan button 605 is pressed, the screen transitions to the pre-scan settings screen 700, illustrated in Fig. 8. The screen also transitions to the pre-print photo settings screen (not shown) when the photo print button 604 is pressed.

In step S503, the CPU 103 determines whether the scanning function has been selected. Specifically, for example, when the scan button 603 provided in the top page screen 600 or the scan button 605 provided in the sidebar 601 is pressed, an instruction to execute the scanning function is determined to have been accepted. The processing of Fig. 6 ends when the scanning function is determined not to have been selected.

If the scanning function is determined to have been selected, in step S504, the CPU 103 displays the pre-scan settings screen 700 on the display unit 108.

Fig. 8 is a diagram illustrating an example of the pre-scan settings screen 700 displayed in step S504. A scan button 701 for executing a scan is disposed in the pre-scan settings screen 700.

In step S505, the CPU 103 detects the scan button 701 disposed in the pre-scan settings screen 700 being pressed. When the scan button 701 is pressed, a command for scanning content to be read (an image of an original document) is transmitted to the printer 151.

In step S506, the CPU 103 determines whether the printer 151 is in a scanning-capable state. The CPU 103 determines whether the printer 151 is in a scanning-capable state based on information indicating whether scanning has succeeded or failed, transmitted by the printer 151 in response to the command transmitted in step S505. The information indicating scanning has succeeded is information indicating, for example, that scanning has started or scanning has been completed. The information indicating scanning has failed is information indicating, for example, a scanner reading error. If the printer 151 is determined not to be in a scanning-capable state, the processing of Fig. 6 ends.

However, if the printer 151 is determined to be in a scanning-capable state, in step S507, the CPU 103 detects the scanning processing by the printer 151 as being complete. The CPU 103 detects the scanning processing by the printer 151 as being complete based on information indicating that scanning is complete having been received from the printer 151. Note that in this case, if the information indicating the scanning has succeeded is received in step S506, the sequence may move to step S508 without the processing of step S507 being performed.

In step S508, the CPU 103 displays a post-scan settings screen 800 on the display unit 108.

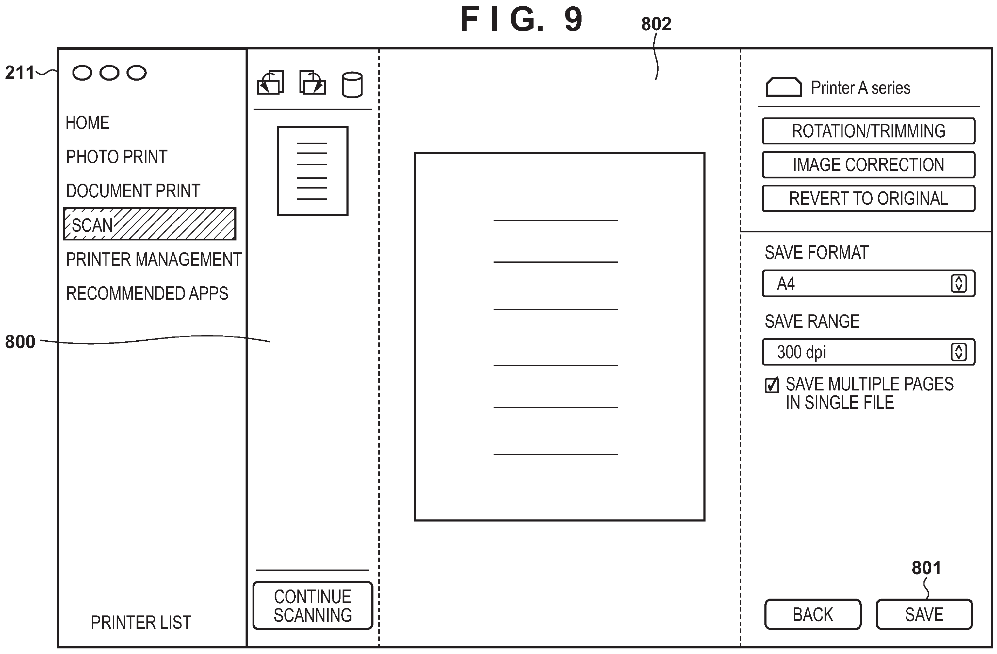

Fig. 9 is a diagram illustrating an example of the post-scan settings screen 800 displayed in step S508. A screen 802 indicating a scanning result, and a save button 801 for displaying a dialog for specifying a storage destination for image data from the scanning result, are provided in the post-scan settings screen 800.

In step S509, the CPU 103 determines whether an instruction to save the scanning result has been received on the post-scan settings screen 800. Specifically, for example, the CPU 103 determines whether the save button 801 provided in the post-scan settings screen 800 has been pressed. If an instruction for saving the scanning result is determined not to have been received, the processing of Fig. 6 ends.

However, if an instruction to save the scanning result is determined to have been received, in step S510, the CPU 103 displays a scanning result saving screen 900 on the display unit 108.

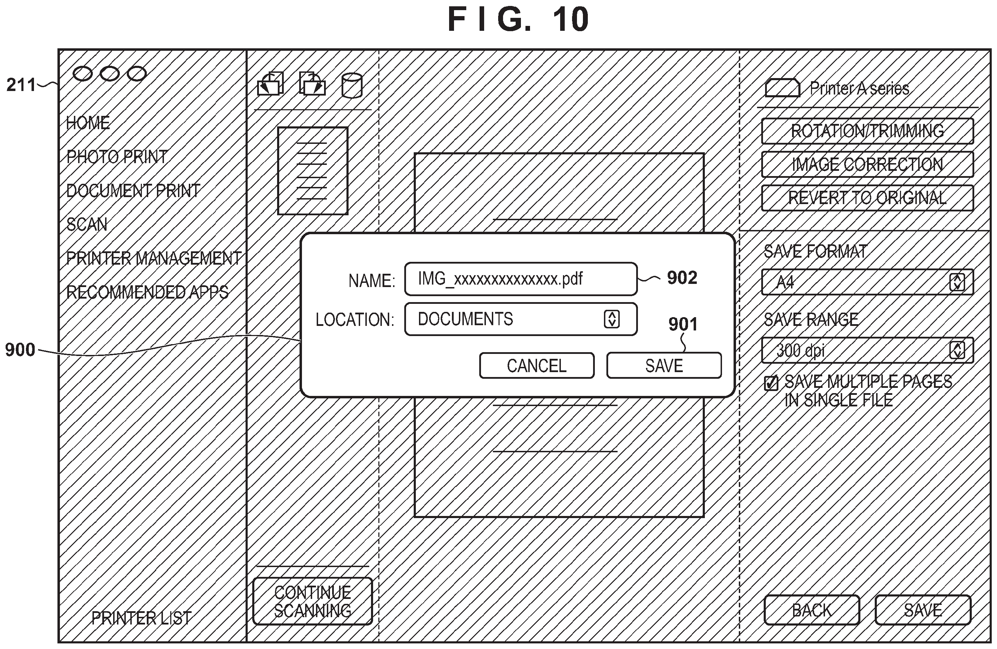

Fig. 10 is a diagram illustrating an example of the scanning result saving screen 900 displayed in step S510. A region 902 where a scanning result storage destination can be selected and a save button 901 are provided in the scanning result saving screen 900.

In step S511, the CPU 103 determines whether an instruction to save the scanning result to the saving destination has been received on the scanning result saving screen 900. Specifically, the CPU 103 determines whether the save button 901 provided in the scanning result saving screen 900 has been pressed, for example. If an instruction for saving the scanning result to the saving destination is determined not to have been received, the processing of Fig. 6 ends.

However, if an instruction to save the scanning result to the saving destination is determined to have been received, in step S512, the CPU 103 controls the image data of the scanning result to be saved to the saving destination specified by the region 902. Then, in step S512, the CPU 103 determines whether a condition for displaying an automatic power-on guidance screen 1000 is satisfied.

The automatic power-on guidance screen 1000 will be described here.

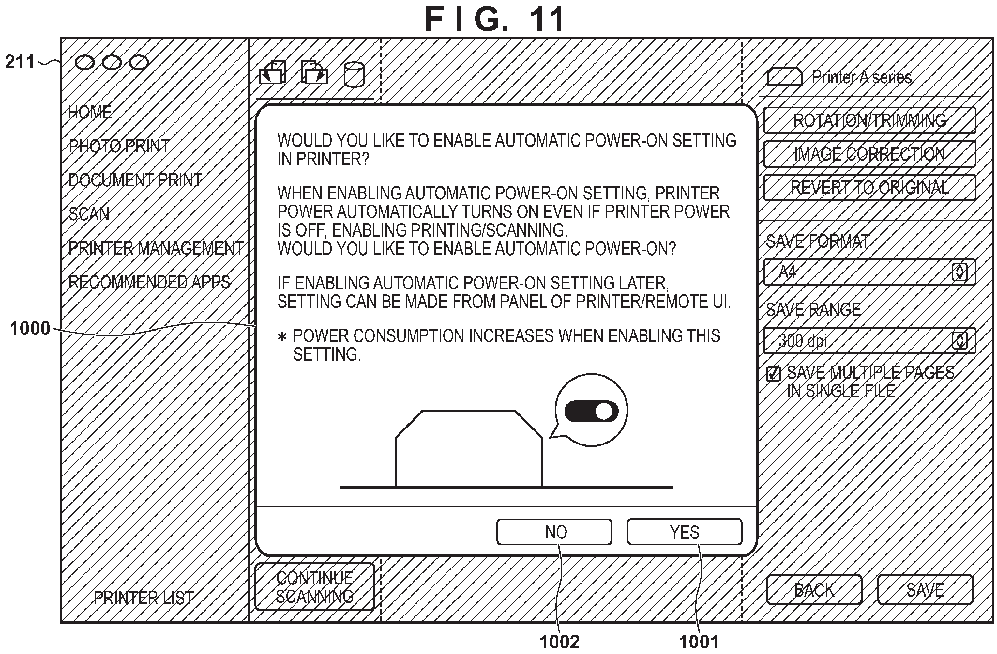

Fig. 11 is a diagram illustrating an example of the automatic power-on guidance screen 1000. The automatic power-on guidance screen 1000 is a screen for guiding the user regarding the setting of the automatic power-on function of the printer 151. As illustrated in Fig. 11, a message screen for guiding the user to enable the automatic power-on function is displayed in the automatic power-on guidance screen 1000, e.g., "Would you like to enable automatic power-on in the printer?" A Yes button 1001 and a No button 1002 are provided in the automatic power-on guidance screen 1000. When the Yes button 1001 is pressed, the CPU 103 transmits a command to the printer to enable the automatic power-on function. However, when the No button 1002 is pressed, the CPU 103 closes the automatic power-on guidance screen 1000 without transmitting a command regarding the setting of the automatic power-on function to the printer 151.

The number of times the automatic power-on guidance screen 1000 has been displayed not having reached a predetermined number is an example of the condition for displaying the automatic power-on guidance screen 1000. The condition for displaying the automatic power-on guidance screen 1000 may be set for each printer 151. Although the present embodiment gives the number of times the screen has been displayed as the condition, another condition may be used instead. For example, the condition may be that model of the printer 151 is a predetermined model. If the condition for displaying the automatic power-on guidance screen 1000 is determined not to be satisfied, the processing of Fig. 6 ends.

However, if the condition for displaying the automatic power-on guidance screen 1000 is determined to be satisfied, in step S513, the CPU 103 displays the automatic power-on guidance screen 1000 on the display unit 108.

In step S514, the CPU 103 determines whether an instruction to set the automatic power-on function of the printer 151 to be enabled has been received through the automatic power-on guidance screen 1000. Specifically, for example, the CPU 103 determines whether the Yes button 1001 provided in the automatic power-on guidance screen 1000 has been pressed. If an instruction for setting the automatic power-on function of the printer 151 to be enabled is determined not to have been received, the processing of Fig. 6 ends.

However, if the instruction to enable the automatic power-on function of the printer 151 is determined to have been received, in step S515, the CPU 103 transmits a command to set the automatic power-on function to be enabled to the printer 151. After step S515, the processing of Fig. 6 ends.

In this manner, in the present embodiment, the host computer 101 determines the condition for displaying a screen that guides the user regarding the setting of the automatic power-on function at the timing at which the save button 901 provided in the scanning result saving screen 900 displayed by the application 211 is pressed, after the setup of the printer 151 is detected as being complete by the application 211. Then, when the display condition is determined to be satisfied, a screen that guides the user regarding the setting of the automatic power-on function is displayed. In other words, when the setup of the printer 151 is detected as being complete, the condition for displaying the screen that guides the user regarding the setting of the automatic power-on function is determined at the timing at which a user operation is performed for completing the execution of the scanning function of the printer 151, and when the display condition is determined to be satisfied, the screen is displayed. As a result, even if the printer 151 is in a power-saving state when the scanning function of the printer 151 is selected and executed again, the user does not need to set the automatic power-on function, which makes it possible to improve the convenience. The user can also be caused to recognize that the printer 151 which has been set up includes an automatic power-on function.

### Second Embodiment

A second embodiment will be described hereinafter, focusing on differences from the first embodiment.

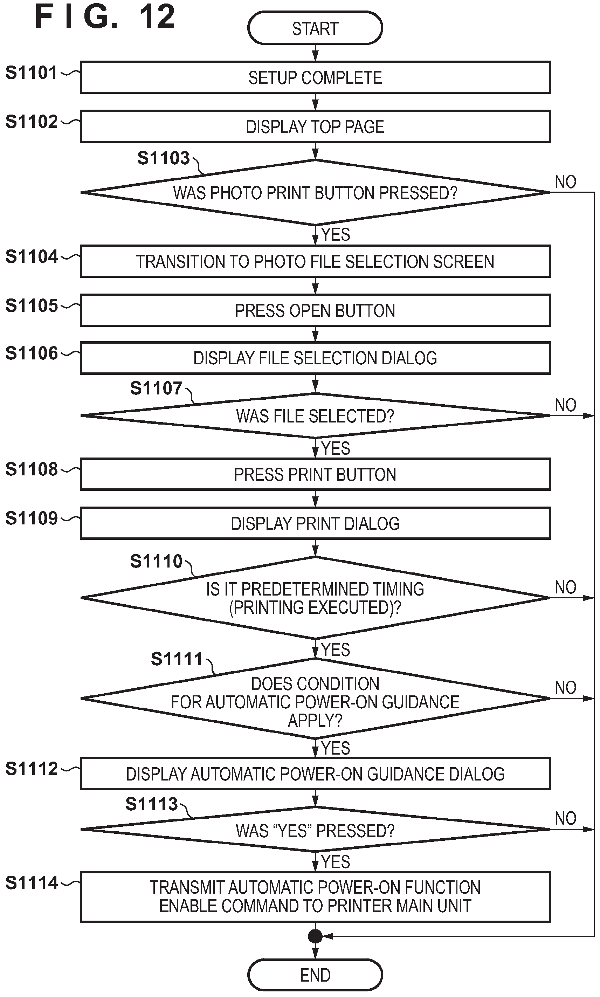

Fig. 12 is a flowchart illustrating processing for guiding the user regarding the setting of the automatic power-on function at a predetermined timing, according to the present embodiment. The processing in Fig. 12 is implemented, for example, by the CPU 103 reading out a program stored in the ROM 104 into the RAM 105 and executing that program. The processing illustrated in Fig. 12 is executed by the application 211.

The processing of steps S1101 and S1102 is the same as that described with reference to steps S501 and S502 in Fig. 6, and will therefore not be described.

After step S1102, in step S1103, the CPU 103 determines whether the photo printing function has been selected. Specifically, for example, when the photo print button 602 provided in the top page screen 600 or the photo print button 604 provided in the sidebar 601 is pressed, an instruction to execute the photo printing function is determined to have been accepted. If the photo printing function is determined not to have been selected, the processing of Fig. 12 ends.

If the photo printing function is determined to have been selected, in step S1104, the CPU 103 displays a photo file selection screen 1200 on the display unit 108.

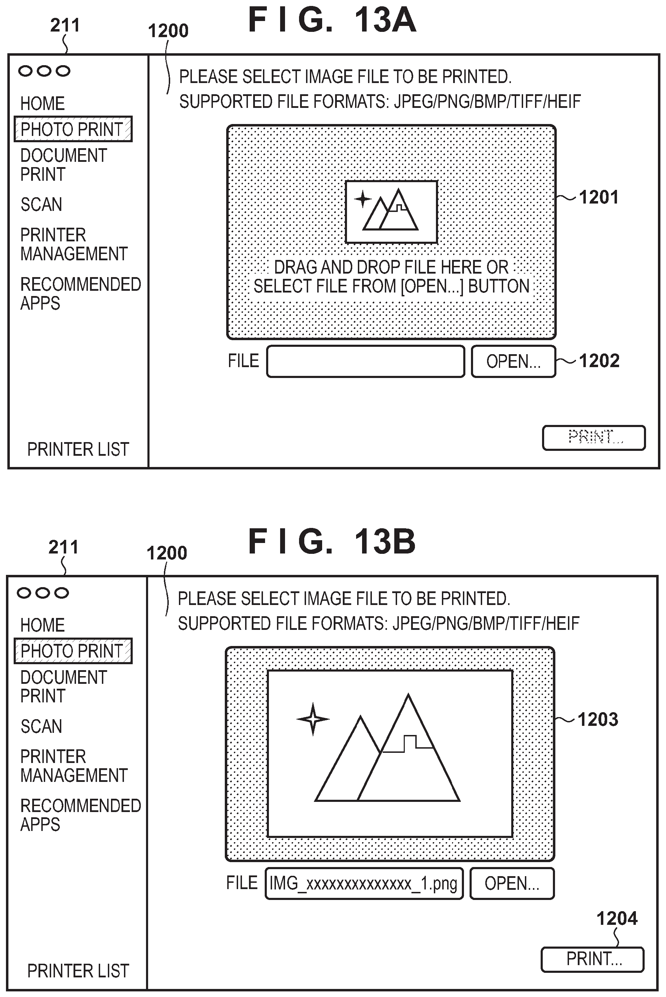

Fig. 13A is a diagram illustrating an example of the photo file selection screen 1200 displayed in step S1104. An image area 1201 and an Open button 1202 are provided in the photo file selection screen 1200. The image area 1201 is a region in which a preview image of an image selected by the user is displayed. The Open button 1202 is a button that, when pressed by the user, opens a photo file selection dialog screen 1300 (described later).

In step S1105, the CPU 103 detects the Open button 1202 being pressed. Then, in step S1106, the CPU 103 displays the photo file selection dialog screen 1300 on the display unit 108.

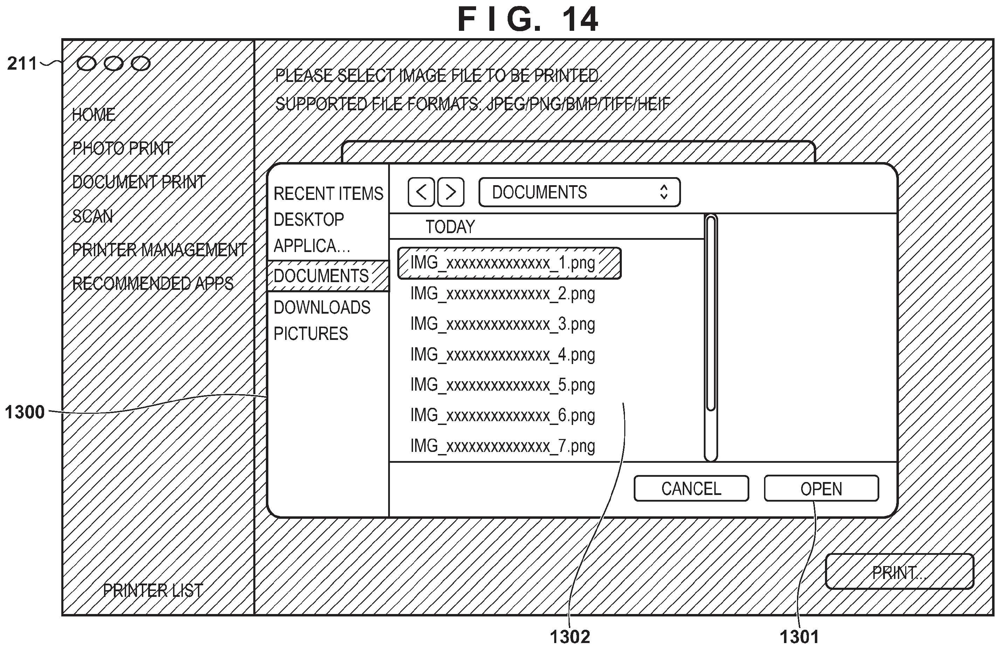

Fig. 14 is a diagram illustrating an example of the photo file selection dialog screen 1300 displayed in S1106. An Open button 1301 and a region 1302 where a photo file to be printed can be selected are provided in the photo file selection dialog screen 1300.

In step S1107, the CPU 103 determines whether a photo file to be printed has been selected. Specifically, for example, the CPU 103 determines that a photo file to be printed has been selected when a photo file is selected in the region 1302 and the Open button 1301 is pressed in the photo file selection dialog screen 1300. If the photo file to be printed is determined not to have been selected, the processing of Fig. 12 ends.

However, if the photo file to be printed is determined to have been selected, in step S1108, the CPU 103 displays the photo file selection screen 1200 on the display unit 108.

Fig. 13B is a diagram illustrating an example of the photo file selection screen 1200 displayed in step S1108. An image of the photo file selected in the region 1302 is indicated in an image area 1203. In the photo file selection screen 1200 illustrated in Fig. 13B, a print button 1204 is controlled to be displayed such that user operations can be accepted. Note that in the photo file selection screen 1200 illustrated in Fig. 13A, the print button 1204 is controlled to be displayed such that user operations cannot be accepted. Furthermore, in step S1108, the CPU 103 detects the print button 1204 being pressed. In other words, the CPU 103 detects the acceptance of an instruction to execute printing from the user.

In step S1109, the CPU 103 displays an OS-standard print dialog screen 1400 on the display unit 108. Note that the processing of step S1109 may be executed by the application 211 making a request (a call) to the printing system 201.

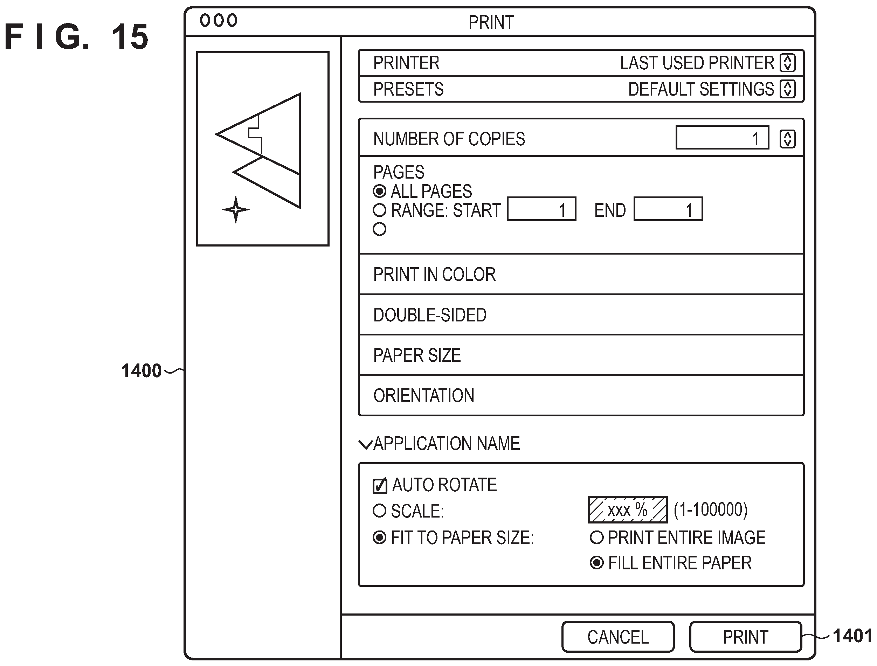

Fig. 15 is a diagram illustrating an example of the OS-standard print dialog screen 1400 displayed in step S1109. The print dialog screen 1400 is a print settings screen in which print settings items such as the number of copies to be printed, the paper size, and the like are displayed. A print button 1401 capable of accepting an instruction to execute printing is also provided in the print dialog screen 1400.

In step S1110, the CPU 103 determines whether an instruction to execute printing has been received. Specifically, for example, the CPU 103 determines whether the print button 1401 provided in the OS-standard print dialog screen 1400 has been pressed. If an instruction for executing printing is determined not to have been received, the processing of Fig. 12 ends.

However, if an instruction to execute printing is determined to have been received, in step S1111, the CPU 103 transmits a print command for content (an image of the photo file) to the printer 151. Then, in step S1111, the CPU 103 determines whether a condition for displaying an automatic power-on guidance screen 1500 is satisfied.

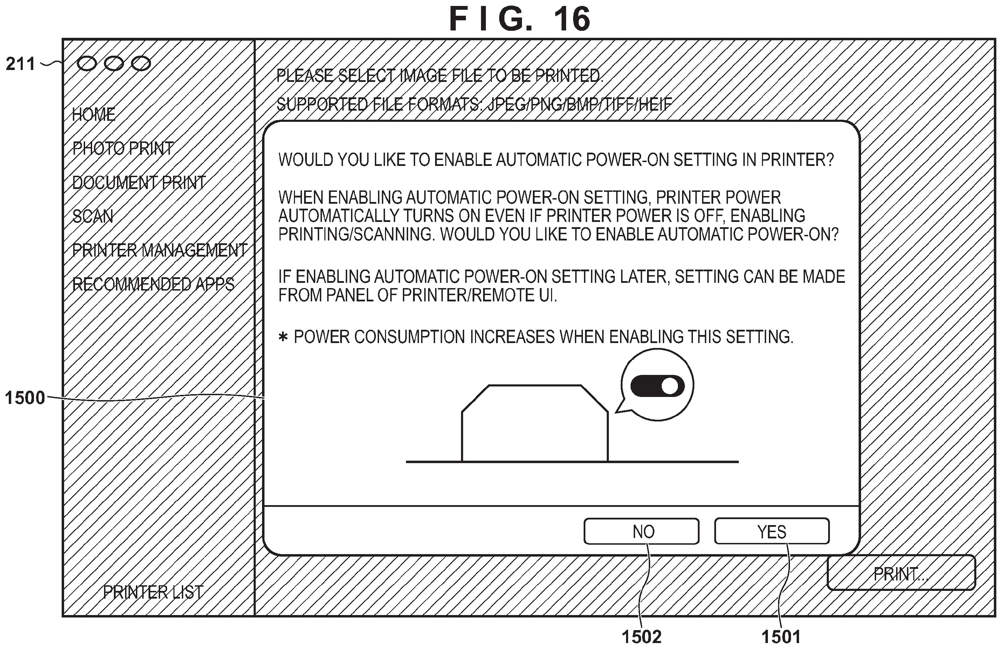

Fig. 16 is a diagram illustrating an example of the automatic power-on guidance screen 1500. The automatic power-on guidance screen 1500 is a screen for guiding the user regarding the setting of the automatic power-on function of the printer 151. As illustrated in Fig. 16, a message screen for guiding the user to enable the automatic power-on function is displayed in the automatic power-on guidance screen 1500, e.g., "Would you like to enable automatic power-on in the printer?" A Yes button 1501 and a No button 1502 are provided in the automatic power-on guidance screen 1500. When the Yes button 1501 is pressed, the CPU 103 transmits a command to the printer 151 to enable the automatic power-on function. However, when the No button 1502 is pressed, the CPU 103 closes the automatic power-on guidance screen 1500 without transmitting a command regarding the setting of the automatic power-on function to the printer 151.

The number of times the automatic power-on guidance screen 1500 has been displayed not having reached a predetermined number is an example of the condition for displaying the automatic power-on guidance screen 1500. The condition for displaying the automatic power-on guidance screen 1500 may be set for each printer 151. Although the present embodiment gives the number of times the screen has been displayed as the condition, another condition may be used instead. For example, the condition may be that the model of the printer 151 is a predetermined model. If the condition for displaying the automatic power-on guidance screen 1500 is determined not to be satisfied, the processing of Fig. 12 ends.

However, if the condition for displaying the automatic power-on guidance screen 1500 is determined to be satisfied, in step S1112, the CPU 103 displays the automatic power-on guidance screen 1500 on the display unit 108.

In step S1113, the CPU 103 determines whether an instruction to set the automatic power-on function of the printer 151 to be enabled has been received through the automatic power-on guidance screen 1500. Specifically, for example, the CPU 103 determines whether the Yes button 1501 provided in the automatic power-on guidance screen 1500 has been pressed. If an instruction for setting the automatic power-on function of the printer 151 to be enabled is determined not to have been received, the processing of Fig. 12 ends.

However, if the instruction to set the automatic power-on function of the printer 151 to be enabled is determined to have been received, in step S1114, the CPU 103 transmits a command to set the automatic power-on function to be enabled to the printer 151.

In this manner, in the present embodiment, the host computer 101 determines the condition for displaying the screen that guides the user regarding the setting of the automatic power-on function at the timing at which the print button 1401 provided in the print dialog screen 1400 is pressed, after the setup of the printer 151 is detected as being complete by the application 211. Then, when the display condition is determined to be satisfied, a screen that guides the user regarding the setting of the automatic power-on function is displayed. In other words, after the setup of the printer 151 is detected as being complete, the condition for displaying the screen that guides the user regarding the setting of the automatic power-on function is determined at the timing at which a user operation is performed for completing the execution of the printing function of the printer 151, and when the display condition is determined to be satisfied, the screen is displayed. As a result, even if the printer 151 is in a power-saving state when the printing function of the printer 151 is selected and executed again, the user does not need to set the automatic power-on function, which makes it possible to improve the convenience. The user can also be caused to recognize that the printer 151 which has been set up includes an automatic power-on function.

### Third Embodiment

A third embodiment will be described next, focusing on differences from the first and second embodiments.

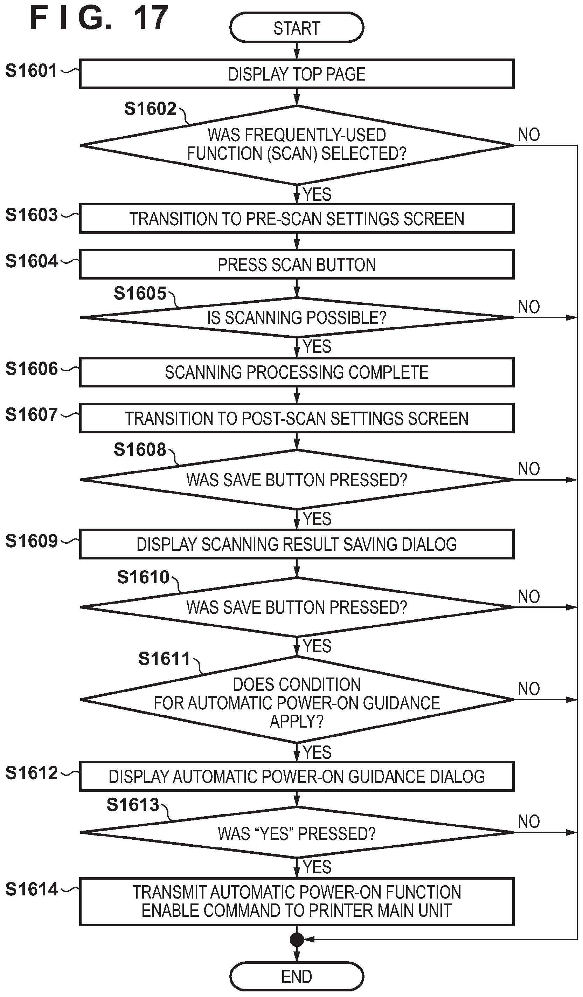

Fig. 17 is a flowchart illustrating processing for guiding the user regarding the setting of the automatic power-on function at a predetermined timing, according to the present embodiment. The processing in Fig. 17 is implemented, for example, by the CPU 103 reading out a program stored in the ROM 104 into the RAM 105 and executing that program. The processing illustrated in Fig. 17 is executed by the application 211.

In step S1601, the CPU 103 displays the top page screen 600 of the application 211 on the display unit 108.

In step S1602, the CPU 103 determines whether a frequently-used function has been selected in the top page screen 600 or the sidebar 601. The present embodiment will describe the scanning function as the frequently-used function, for example. Specifically, for example, the CPU 103 determines that the frequently-used function has been selected when the scan button 603 provided in the top screen 600 or the scan button 605 provided in the sidebar 601 is pressed. If the frequently-used function is determined not to have been selected, the processing of Fig. 17 ends. In the present embodiment, the user may be capable of setting the scanning function as the frequently-used function in advance. In addition, information indicating an execution frequency, such as the number of times each function has been executed in a predetermined period, may be stored in an external apparatus such as the printer 151 or a server, and when the top page screen 600 of the application 211 is displayed, the CPU 103 may obtain the information indicating the execution frequency for each function from the printer 151 or the external apparatus and use a function that has been executed at least a predetermined number of times as the frequently-used function. This makes it possible to switch the frequently-used function as appropriate. The CPU 103 may also calculate the information indicating the execution frequency, without obtaining the information from the printer 151 or the external apparatus.

If the frequently-used function is determined to have been selected, the sequence moves to step S1603. The present embodiment moves to step S1603 when the scanning function is determined to have been selected, for example. The processing from steps S1603 to S1614 is the same as that described with reference to steps S504 to S515 in Fig. 6, and will therefore not be described.

In this manner, according to the present embodiment, when a frequently-used function is selected by the user in the top screen of the application 211, a condition for displaying a screen that guides the user regarding the setting of the automatic power-on function is determined at the timing at which a user operation for completing the execution of the function is performed, and when the display condition is determined to be satisfied, the screen is displayed. As a result, even if the printer 151 is in a power-saving state when the stated function is selected and executed again, the user does not need to set the automatic power-on function, which makes it possible to improve the convenience. The user can also be effectively caused to recognize that the printer 151 has an automatic power-on function.

### Fourth Embodiment

A fourth embodiment will be described hereinafter, focusing on differences from the first to third embodiments.

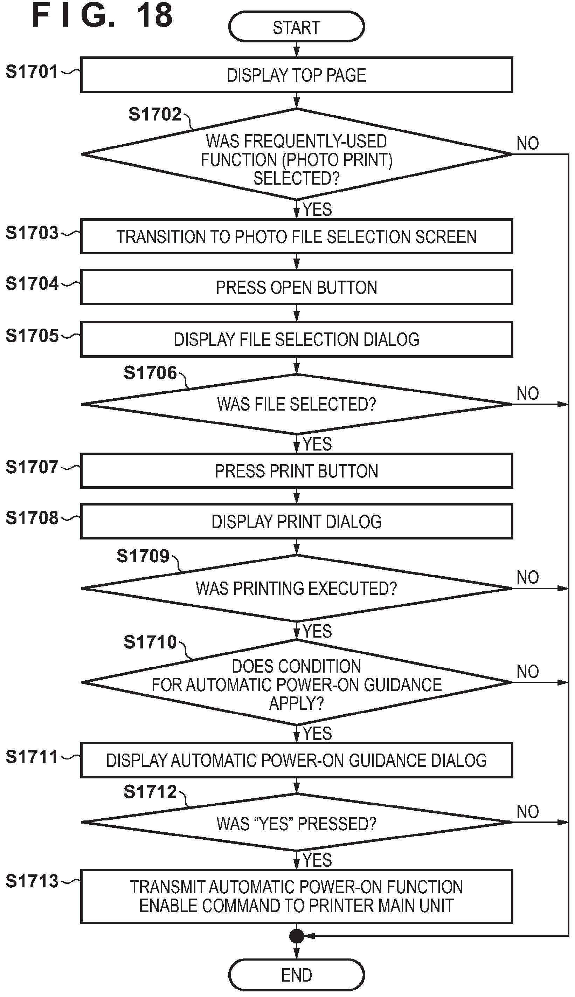

Fig. 18 is a flowchart illustrating processing for guiding the user regarding the setting of the automatic power-on function at a predetermined timing, according to the present embodiment. The processing in Fig. 18 is implemented, for example, by the CPU 103 reading out a program stored in the ROM 104 into the RAM 105 and executing that program. The processing illustrated in Fig. 18 is executed by the application 211.

In step S1701, the CPU 103 displays the top page screen 600 of the application 211 on the display unit 108.

In step S1702, the CPU 103 determines whether a frequently-used function has been selected in the top page screen 600 or the sidebar 601. The present embodiment will describe the printing function as the frequently-used function, for example. Specifically, for example, the CPU 103 determines that the frequently-used function has been selected when the photo print button 602 provided in the top screen 600 or the photo print button 604 provided in the sidebar 601 is pressed. If the frequently-used function is determined not to have been selected, the processing of Fig. 18 ends. In the present embodiment, the user may be capable of setting the printing function as the frequently-used function in advance. In addition, information indicating an execution frequency, such as the number of times each function has been executed in a predetermined period, may be stored in an external apparatus such as the printer 151 or a server, and when the top page screen 600 of the application 211 is displayed, the CPU 103 may obtain the information indicating the execution frequency for each function from the printer 151 or the external apparatus and use a function that has been executed at least a predetermined number of times as the frequently-used function. This makes it possible to switch the frequently-used function as appropriate. The CPU 103 may also calculate the information indicating the execution frequency, without obtaining the information from the printer 151 or the external apparatus.

If the frequently-used function is determined to have been selected, the sequence moves to step S1703. The present embodiment moves to step S1703 when the printing function is determined to have been selected, for example. The processing from steps S1703 to S1713 is the same as that described with reference to steps S1104 to S1114 in Fig. 12, and will therefore not be described.

In this manner, according to the present embodiment, when a frequently-used function is selected by the user in the top screen of the application 211, a condition for displaying a screen that guides the user regarding the setting of the automatic power-on function is determined at the timing at which a user operation for completing the execution of the function is performed, and when the display condition is determined to be satisfied, the screen is displayed. As a result, even if the printer 151 is in a power-saving state when the stated function is selected and executed again, the user does not need to set the automatic power-on function, which makes it possible to improve the convenience. The user can also be effectively caused to recognize that the printer 151 has an automatic power-on function.

### Fifth Embodiment

A fifth embodiment will be described hereinafter, focusing on differences from the first to fourth embodiments. The present embodiment assumes a case where the printer 151 successfully executes a frequently-used function, displays an automatic power-on guidance screen, receives an instruction to set the automatic power-on function to be enabled, and transmits a command to set the automatic power-on function to be enabled to the printer 151, but the automatic power-on function has failed to be enabled in the printer 151. Such a case may arise when the communication protocol for transmitting the command for causing the frequently-used function to be executed to the printer 151 is different from the communication protocol for setting the automatic power-on function to be enabled. In the present embodiment, in such a case, the processing for causing the frequently-used function to be executed is retried. Then, if the condition for displaying the automatic power-on guidance screen is determined to be satisfied again, the command for setting the automatic power-on function to be enabled is transmitted to the printer 151 without displaying the automatic power-on guidance screen. Through this, it is not necessary to repeatedly perform user operations in the automatic power-on guidance screen for the function that the user originally intends to execute, which makes it possible to improve the user experience. The present embodiment will describe the scanning function as an example of the frequently-used function.

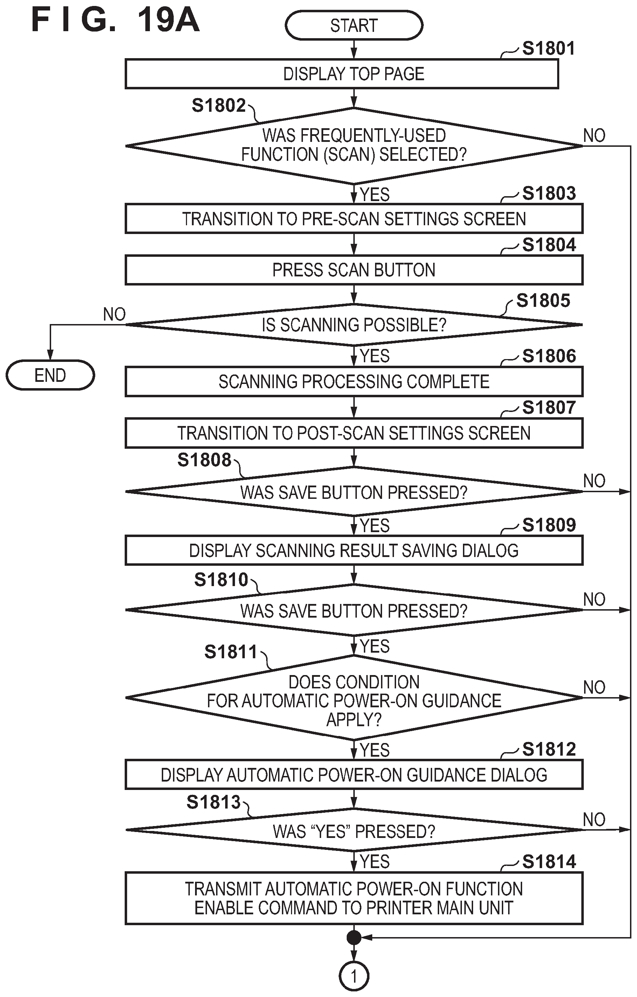

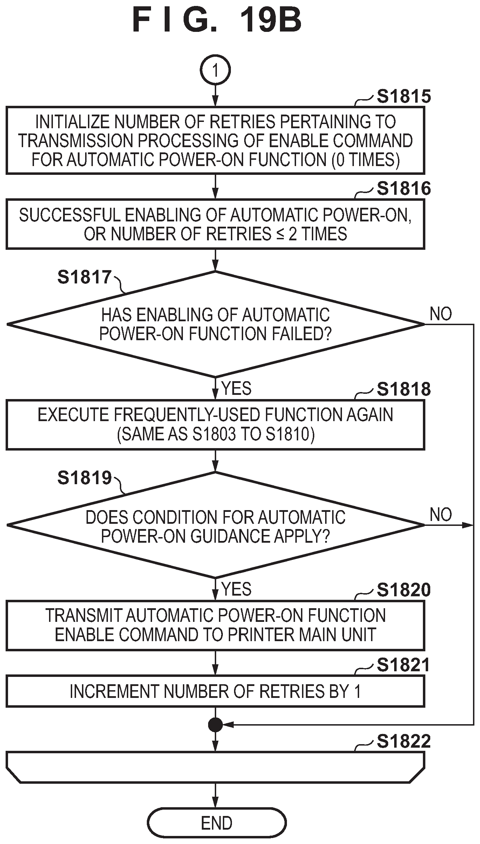

Figs. 19A and 19B are flowcharts illustrating processing for guiding the user regarding the setting of the automatic power-on function at a predetermined timing, according to the present embodiment. The processing in Figs. 19A and 19B are implemented, for example, by the CPU 103 reading out a program stored in the ROM 104 into the RAM 105 and executing that program.

The processing from steps S1801 to S1804 is the same as that described with reference to steps S502 to S505 in Fig. 6, and will therefore not be described.

In step S1805, the CPU 103 determines whether the printer 151 is in a scanning-capable state. The CPU 103 determines whether the printer 151 is in a scanning-capable state based on information indicating whether scanning has succeeded or failed, transmitted by the printer 151 in response to the command transmitted in step S1804. The information indicating scanning has succeeded is information indicating, for example, scanning has started or scanning has been completed. The information indicating scanning has failed is information indicating, for example, a scanner reading error. If the printer 151 is determined not to be in a scanning-capable state, the processing of Figs. 19A and 19B ends.

The present embodiment assumes the case described above, and thus in step S1805, the printer 151 is determined to be in a scanning-capable state, and the sequence moves to step S1806. The processing from steps S1806 to S1814 is the same as that described with reference to steps S507 to S515 in Fig. 6, and will therefore not be described.

After the command for setting the automatic power-on function to be enabled (an enable command) is transmitted to the printer 151 in step S1814, in step S1815, the CPU 103 initializes a number of retries in which the enable command for the automatic power-on function has been transmitted to the printer 151 to zero. Note that the number of retries refers to the number of loops in a processing loop from step S1816 to step S1822, and is secured in a storage area such as the RAM 105.

In step S1816, the CPU 103 determines whether a condition of "whether the automatic power-on function has been successfully enabled or the number of retries is no greater than a predetermined number" has been satisfied. If the condition is determined to be satisfied, the processing loop ends, and the processing of Fig. 18 ends. However, if the condition is determined not to be satisfied, the sequence moves to step S1817. Note that the predetermined number of retries is, for example, two.

In step S1817, the CPU 103 determines whether, in response to the enable command transmitted in step S1814, an error indicating the enabling has failed has been returned from the printer 151 as a response. If an error indicating the enabling has failed is determined not to have been returned, the automatic power-on function has been set to be enabled in the printer 151, and the sequence therefore moves to step S1822. If the sequence moves to step S1822, the condition is determined to be satisfied in step S1816, and the processing loop therefore ends, also ending the processing of Figs. 19A and 19B.

If an error indicating the enabling has failed is determined to have been returned, in step S1818, the CPU 103 executes the same processing as in steps S1803 to S1810. At this time, if the frequently-used function is fixed to the scanning function, or the frequently-used function is the scanning function when step S1818 is executed, the same processing as in steps S1803 to S1810 is executed in step S1818. However, if the frequently-used function is switched from the scanning function to another function when step S1818 is executed, processing different from that of steps S1803 to S1810 may be executed in step S1818. Even if the frequently-used function is switched from the scanning function to another function when step S1818 is executed, the same processing as in steps S1803 to S1810 may be executed in step S1818. If the determination of step S1805, executed in step S1818, is negative (e.g., a determination that the printer 151 is not in a scanning-capable state), the processing loop ends, and the processing of Figs. 19A and 19B ends.

In step S1819, the CPU 103 determines whether a condition for displaying an automatic power-on guidance screen 1000 is satisfied, in the same manner as in step S1811. If the condition for displaying the automatic power-on guidance screen 1000 is determined not to be satisfied, the sequence moves to step S1822.

However, if the condition for displaying the automatic power-on guidance screen 1000 is determined to be satisfied, in step S1820, the CPU 103 transmits a command to set the automatic power-on function to be enabled to the printer 151, in the same manner as in step S1814. The automatic power-on guidance screen 1000 is not displayed in step S1820.

In step S1821, the CPU 103 increments the number of retries by 1, and in step S1822, returns the sequence to step S1816.

In this manner, according to the present embodiment, when processing for transmitting the command for enabling the automatic power-on function of the printer 151 fails, the guidance screen is not displayed even if the frequently-used function is executed again. Accordingly, it is not necessary to repeatedly perform user operations pertaining to the function that the user originally intends to execute, which makes it possible to improve the user experience.

### Sixth Embodiment

A sixth embodiment will be described hereinafter, focusing on differences from the first to fifth embodiments.

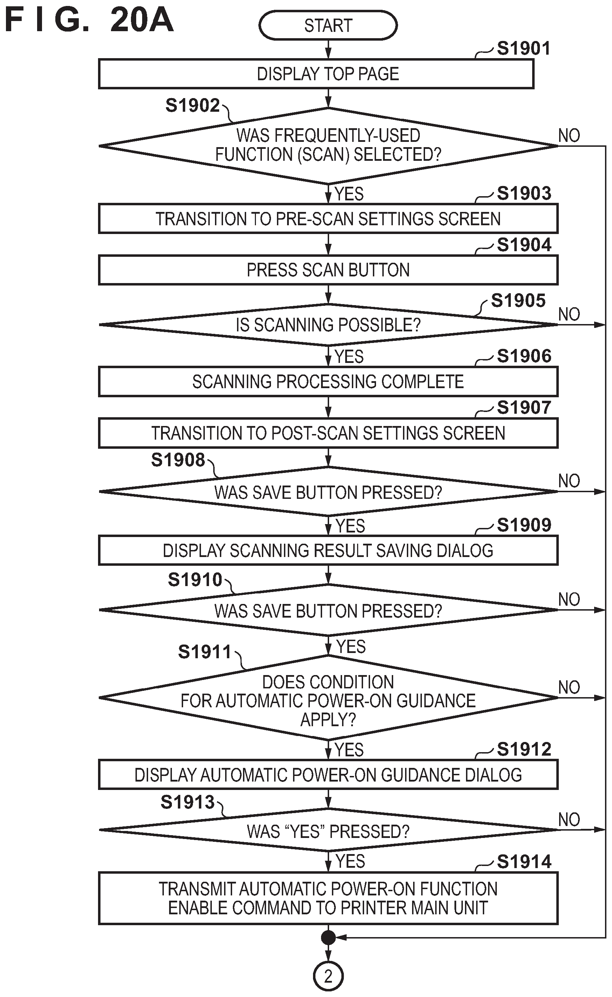

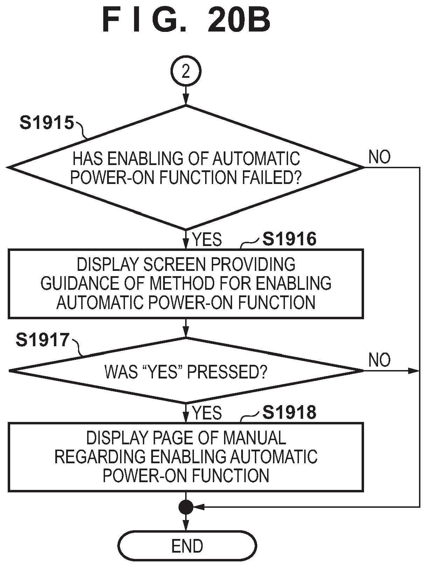

Figs. 20A and 20B are flowcharts illustrating processing for guiding the user regarding the setting of the automatic power-on function at a predetermined timing, according to the present embodiment. The processing in Figs. 20A and 20B are implemented, for example, by the CPU 103 reading out a program stored in the ROM 104 into the RAM 105 and executing that program. The processing illustrated in Figs. 20A and 20B are executed by the application 211.

The processing from steps S1901 to S1914 is the same as that described with reference to steps S502 to S515 in Fig. 6, and will therefore not be described.

After the command for setting the automatic power-on function to be enabled (the enable command) is transmitted to the printer 151 in step S1914, in step S1915, the CPU 103 determines whether an error indicating the enabling has failed has been returned from the printer 151 in response to the enable command transmitted in step S1914. If an error indicating the enabling has failed is determined not to have been returned, the automatic power-on function has been set to be enabled in the printer 151, and the processing of Figs. 20A and 20B ends.

However, if an error indicating the enabling has failed is determined to have been returned, in step S1916, the CPU 103 displays, on the display unit 108, an error screen 2000 regarding the processing for enabling the automatic power-on function.

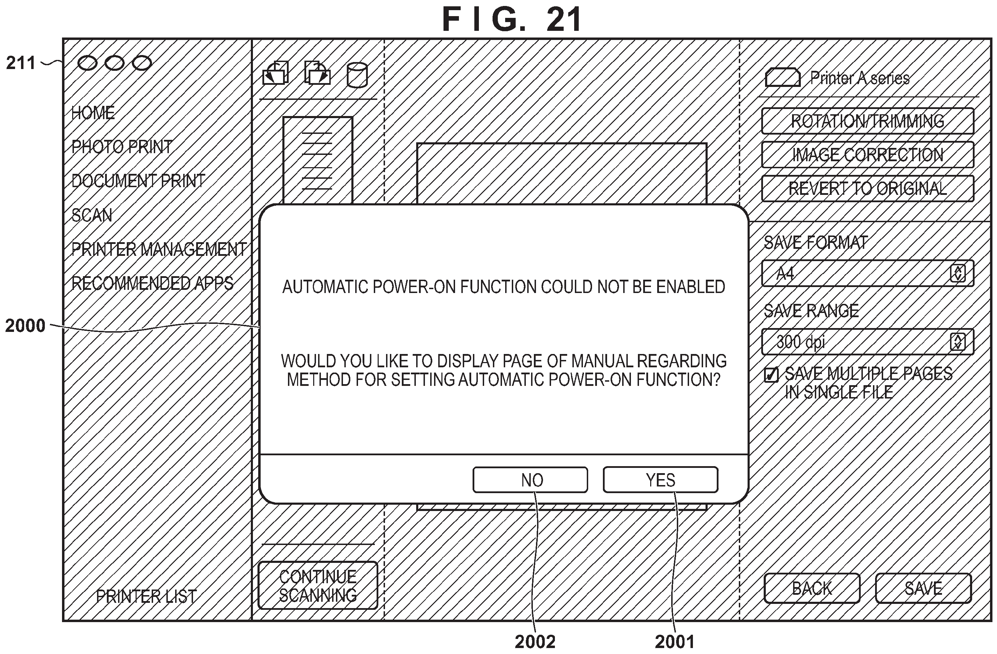

Fig. 21 is a diagram illustrating an example of the error screen 2000 displayed in step S1916. As illustrated in Figs. 20A and 20B, a message screen indicating that the processing for enabling the automatic power-on function has failed is displayed in the error screen 2000. A guidance screen prompting the display of a page of the manual regarding the method for enabling the automatic power-on function of the printer 151 is also displayed in the error screen 2000. The method for enabling the automatic power-on function of the printer 151 is, for example, a method for setting the automatic power-on function to be enabled through the display unit 161 of the printer 151. The method also includes, for example, setting the automatic power-on function to be enabled through a remote UI provided by the function display unit 213 of the application 211. A Yes button 2001 capable of accepting an instruction to display the page of the manual and a No button 2002 that does not accept an instruction to display the page of the manual are provided in the error screen 2000.

In step S1917, the CPU 103 determines whether an instruction to display the page of the manual regarding the method for enabling the automatic power-on function of the printer 151 has been received. Specifically, for example, the CPU 103 determines whether the Yes button 2001 has been pressed. If an instruction for displaying the page of the manual regarding the method for enabling the automatic power-on function of the printer 151 is determined not to have been received, the processing of Figs. 20A and 20B ends.

However, if an instruction for displaying the page of the manual regarding the method for enabling the automatic power-on function of the printer 151 is determined to have been received, in step S1918, the CPU 103 displays the page of the manual regarding the method for enabling the automatic power-on function of the printer 151. Specifically, for example, the CPU 103 displays the stated page of the manual as a web page through the function display unit 213 of the application 211. The page of the manual may be obtained from an external apparatus such as a server or the like. The processing of Figs. 20A and 20B ends after step S1918.

As described above, according to the present embodiment, the user can be effectively made to recognize that the automatic power-on function of the printer 151 has failed to be enabled.

According to the present disclosure, changes to power-related settings can be made appropriately.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus capable of communicating with a communication apparatus, the information processing apparatus comprising:
first display control means configured to, at a predetermined timing after setting processing of the communication apparatus for performing communication between the information processing apparatus and the communication apparatus is executed, control a dialog screen that prompts a change in a power-related setting of the communication apparatus to be displayed based on a condition for displaying the dialog screen being satisfied,
wherein the dialog screen is configured to be capable of accepting an instruction as to whether to change the power-related setting.

2. The information processing apparatus according to claim 1, further comprising:
second display control means configured to control a screen capable of accepting an instruction for executing a function of the communication apparatus to be displayed, after the setting processing of the communication apparatus is performed, and
the predetermined timing is a timing at which the instruction for executing the function of the communication apparatus is accepted in the screen capable of accepting the instruction for executing the function of the communication apparatus.

3. The information processing apparatus according to claim 2,
wherein the condition is that the communication apparatus is a predetermined model.

4. The information processing apparatus according to claim 2,
wherein in a case where the function of the communication apparatus is a printing function, the instruction for executing the function of the communication apparatus is an instruction to execute printing made in a print settings screen.

5. The information processing apparatus according to claim 2,
wherein in a case where the function of the communication apparatus is a scanning function, the instruction for executing the function of the communication apparatus is an execution instruction to save a scanning result.

6. The information processing apparatus according to claim 2,
wherein the function of the communication apparatus is a frequently-used function among functions the communication apparatus is capable of executing.

7. The information processing apparatus according to claim 2, further comprising:
transmitting means configured to transmit a command to change the power-related setting to the communication apparatus in a case where an instruction to change the power-related setting is accepted in the dialog screen.

8. The information processing apparatus according to claim 7,
wherein in a state where the instruction to execute the function of the communication apparatus was accepted and the function of the communication apparatus was executed, in a case where the command was transmitted by the transmitting means but the power-related setting is not changed in the communication apparatus, the communication apparatus is caused to execute the function of the communication apparatus again, and the command is transmitted by the transmitting means without the dialog screen being displayed.

9. The information processing apparatus according to claim 7, further comprising:
third display control means configured to control a screen providing guidance of a method for changing the power-related setting to be displayed in a case where the command was transmitted by the transmitting means but the power-related setting is not changed in the communication apparatus.

10. The information processing apparatus according to claim 9,
wherein the screen providing guidance of the method for changing the power-related setting is a screen that prompts display of a page of a manual.

11. The information processing apparatus according to claim 2,
wherein after the setting processing of the communication apparatus for performing communication between the information processing apparatus and the communication apparatus is performed and information about the communication apparatus is registered in the information processing apparatus, the first display control means controls a screen capable of accepting an instruction to execute the function of the communication apparatus to be displayed.

12. The information processing apparatus according to claim 1,
wherein changing the power-related setting of the communication apparatus corresponds to enabling an automatic power-on function of the communication apparatus.

13. The information processing apparatus according to claim 1,
wherein the setting processing of the communication apparatus for performing communication between the information processing apparatus and the communication apparatus is processing for connecting the information processing apparatus to the communication apparatus operating as an access point.

14. The information processing apparatus according to claim 1,
wherein the setting processing of the communication apparatus for performing communication between the information processing apparatus and the communication apparatus is processing for connecting the communication apparatus to an access point external to the information processing apparatus and external to the communication apparatus.

15. A method executed by an information processing apparatus capable of communicating with a communication apparatus, the method comprising:
controlling, at a predetermined timing after setting processing of the communication apparatus for performing communication between the information processing apparatus and the communication apparatus is executed, a dialog screen that prompts a change in a power-related setting of the communication apparatus to be displayed based on a condition for displaying the dialog screen being satisfied,
wherein the dialog screen is configured to be capable of accepting an instruction as to whether to change the power-related setting.

16. A program configured to cause a computer of an information processing apparatus to function to:
control, at a predetermined timing after setting processing of a communication apparatus for performing communication between the information processing apparatus and the communication apparatus is executed, a dialog screen that prompts a change in a power-related setting of the communication apparatus to be displayed based on a condition for displaying the dialog screen being satisfied,
wherein the dialog screen is configured to be capable of accepting an instruction as to whether to change the power-related setting.

17. A non-transitory computer-readable storage medium storing a program configured to cause a computer of an information processing apparatus to function to:
control, at a predetermined timing after setting processing of a communication apparatus for performing communication between the information processing apparatus and the communication apparatus is executed, a dialog screen that prompts a change in a power-related setting of the communication apparatus to be displayed based on a condition for displaying the dialog screen being satisfied,
wherein the dialog screen is configured to be capable of accepting an instruction as to whether to change the power-related setting.
